# EUROPEAN PATENT SPECIFICATION

(11) **EP 2 355 206 B1**
(45) Date of publication and mention of the grant of the patent: **08.10.2014**
(21) Application number: 10002454.6
(22) Date of filing: 09.03.2010
(51) Int. Cl.: H01M 2/10, H01M 2/30, H01M 2/20, H01M 2/06, H01M 2/08

(54) **Water-tight battery system**
Wasserfestes Batteriesystem
Système de batterie étanche à l'eau

(30) Priority: 27.01.2010 JP 2010015523
(43) Date of publication of application: 10.08.2011
(73) Proprietor: SANYO Electric Co., Ltd., Moriguchi-shi Osaka 570-8677 (JP); Yamaha Hatsudoki Kabushiki Kaisha, Iwata-shi, Shizuoka 438-8501 (JP)
(72) Inventor: YONEDA Haruhiko, Moriguchi-shi, Osaka 570-8677 (JP); FUKUKAMA Kouichi, Moriguchi-Chi, Osaka 570-8677 (JP); YONEYAMA Shingo, Moriguchi-shi, Osaka 570-8677 (JP); TERADA, Junji, Iwata-shi, Shizuoka 438-8501 (JP); NAITO Shinya, Iwata-shi, Shizuoka 438-8501 (JP); ITAGAKI Takahiro, Iwata-shi, Shizuoka 438-8501 (JP); NISHIYAMA Motokuni, Iwata-shi, Shizuoka 438-8501 (JP)
(74) Representative: Beier, Ralph

(56) References cited:
- JP-A- 2008 066 000
- US-A1- 2002 039 679
- US-A1- 2009 253 034

## Description

### BACKGROUND OF THE INVENTION

### 1. Field of the Invention

The present invention relates to a battery system with positive and negative output terminals mounted in a water-tight configuration on an external case housing a plurality of batteries, and in particular to a battery system optimally suited for use in an electric powered vehicle such as an electric motor-bike.

### 2. Description of the Related Art

The reliability of a battery system used outdoors in a vehicle such as an electric motor-bike can be improved when configured as a water-tight structure. To connect the output-side of the battery system batteries to an electric powered vehicle, it is necessary to run lead wires out of the external case. A water-tight structure that runs output lead wires from an external case has been developed.

Refer to Japanese Laid-Open Patent Publication No. 2008-212106.

JP 2008-212106 A describes use of bushings formed from flexible rubber to run the lead wires from the external case to the outside in a water-tight configuration. Lead wires pass through the inside of the bushings in a water-tight manner, and the outside of the bushings tightly insert into through-holes in the external case in a water-tight manner. However, it is difficult to maintain this structure in an ideal water-tight configuration over the long term. This is because when the bushing, which is exposed outside the external case, degrades and looses flexibility, gaps can develop between the lead wires or the external case, and water can ingress through those gaps. In addition, if a lead wire coming out of the external case is bent with a small radius of curvature in the region passing through the bushing, the bushing cannot flexibly conform to the lead wire and a gap can develop that allows water ingress.

US 2009/0253034 A1 discloses an electric power storage cell comprising several electrochemical elements, which are arranged in a sealed casing, wherein a sealing of the inner side of the casing is obtained by an O-ring between a shoulder extending from each terminal element and the casing wall. US 2002/0039679 A1 discloses a secondary cell comprising an electrode unit within a casing, wherein O-rings are provided as sealing members between a shoulder of an electrode terminal member and the casing.

### SUMMARY OF THE INVENTION

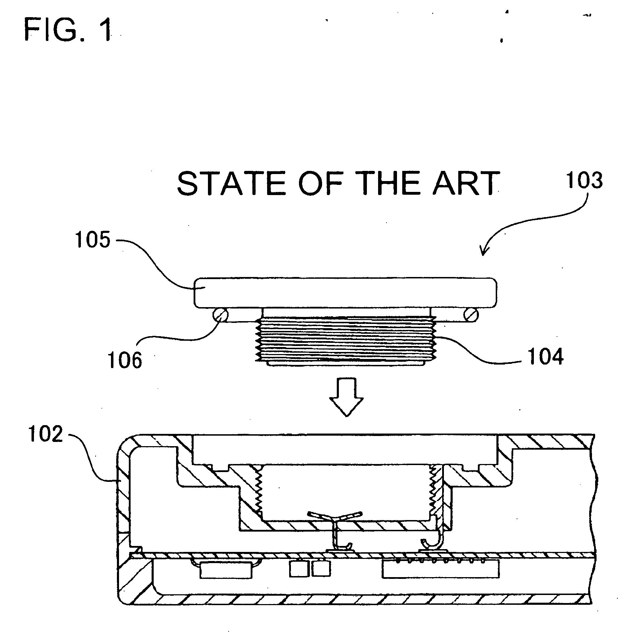

The drawbacks described above can be eliminated, for example, by a structure such as that shown in Fig. 1 (refer to Japanese Laid-Open Patent Publication No. 2005-216512). Here, a cap 103 with threads 104 is screwed into the case 102 and an O-ring 106 intervenes between the threaded cap 103 and the case 102. In this water-tight structure, the male-side threads 104 are screwed in to sandwich the O-ring 106 between a flange 105 established on the cap 103 and the case 102. For example, in the water-tight structure shown in Fig. 1, an output terminal can be pulled outside the case in a water-tight configuration via a cap that is a water-tight connector provided with an output terminal. Specifically, the inside of an output terminal can be connected to the inside of the external case by a water-tight structure such as an output terminal insertion molded into a piece equivalent to the cap of the figure. However, a structure, which screws in threads to attach a connector with an output terminal lead wire connected, requires a different method for attaching the connector to the case. Specifically, it is necessary to attach the connector to the case after the output terminal is connected inside the case. Consequently, connection of an output terminal to the inside of the case is troublesome. Further, the connector must be accurately aligned and attached with the output terminal connected to the inside of the case. At this time, the O-ring must be securely disposed for a water-tight structure, and this system has the drawback that assembly is time consuming. In addition, a battery system installed on-board an electric powered vehicle is subject to vibration when the vehicle is driven, and threaded connectors can become loose. Therefore, this system also has the drawback that a threaded connector can become loose, the O-ring can become dislodged from its secure disposition, and a water-tight configuration cannot be maintained.

The present invention was developed with the object of further resolving the drawbacks described above. Thus, it is an important object of the present invention to provide a battery system that can be easily assembled and can reliably maintain a water-tight configuration over a long period even in a vibrating environment, while simplifying output terminal connection to the inside of the external case.

The battery system of the present invention is provided with an external case 2 molded from insulating material that houses a plurality of batteries 1 and having a water-tight structure and a pair of output terminals 7 connected to the positive and negative output-sides of the batteries 1. A pair of output terminal lead-plates 8 is mounted inside the external case 2 and connected to the positive and negative output-sides of the batteries 1. An output terminal 7 is a metal rod 70 with at least one end that is a circular or elliptical cylindrical section 70A having a circular or elliptical cylindrical shape, and the other end that is a non-circular cylindrical section 70B having a non-circular cylindrical shape. The front end of the metal rod 70 output terminal 7 is exposed outside the surface of the external case 2, and the aft end is attached to an output terminal lead-plate 8 mounted inside the external case 2. Further, the external case 2 has through-holes with cylindrical through-hole sections 26A to pass the circular cylindrical sections 70A of the metal rod 70 output terminals 7, and non-circular cylindrical through-hole sections 26B to insert the non-circular cylindrical sections 70B of the metal rods 70 in a manner that does not rotate. Each output terminal 7 metal rod 70 has a gasket groove 71 in the circular cylindrical section 70A and an O-ring 72 is disposed in that gasket groove 71. The O-ring 72 seals the gap between an output terminal 7 circular cylindrical section 70A and the cylindrical through-hole section 26A in a water-tight configuration. The non-circular cylindrical section 70B inserts into the non-circular cylindrical through-hole section 26B to attach the output terminal 7 to the external case 2 in a manner that does not rotate.

The battery system described above can attach the aft end of an output terminal inside the external case with the external case open, and with the aft end attached, can pass the output terminal through an external case through-hole to connect the output terminal to the external case in a water-tight configuration. Consequently, the battery system can be easily assembled and maintained in a water-tight configuration over a long period even in a vibrating environment such as in an electric powered vehicle, while making simple and reliable output terminal connection to the inside of the external case. In particular, the battery system described above tightly attaches the O-ring on the circular cylindrical section of an output terminal metal rod to the inside surface of a circular cylindrical through-hole in the external case. Therefore, as long as the external case is not opened, the output terminals are held in an ideal water-tight configuration. Further, since the output terminal metal rods do not rotate, the battery system has the characteristic that wire-leads can be simply, easily, and reliably connected to the exposed parts of the output terminals.

The battery system of the present invention can be provided with connection screws 87 to attach the output terminal 7 metal rods 70 to the output terminal lead-plates 8. These connection screws 87 pass through the output terminal lead-plates 8 and screw into screw-holes 74 in the aft ends of the metal rods 70 to attach the output terminals 7 to the output terminal lead-plates 8. This battery system can reliably attach the output terminal metal rods to the output terminal lead-plates with low electrical resistance. Further, since the output terminals attached to the output terminal lead-plates are held in the external case in a manner that does not rotate, the battery system has the characteristic that the output terminals can be robustly attached by the connection screws.

The battery system of the present invention can have screw-holes 73 in the front ends of the output terminal 7 metal rods 70 that are exposed outside the surface of the external case 2. External leads 76 that connect outside the external case 2 can be connected via these screw-holes 73. In this battery system, set screws can be screwed into the screw-holes provided in the output terminal metal rods to reliably connect external leads outside the external case in a low resistance manner. In particular, since output terminal rotation is prevented by the external case, this battery system has the characteristic that external leads can be simply and reliably attached by screwing in the set screws.

The battery system of the present invention can have output terminal 7 metal rods 70 with circular cylindrical section 70A front ends and non-circular cylindrical sections 70B in the rest of the metal rods 70. Further, the maximum outside dimension of the non-circular cylindrical sections 70B can be greater than the maximum outside diameter of the circular cylindrical sections 70A. In this battery system, the output terminal metal rods can be smoothly inserted through the external case, and the external case can be easily assembled. In addition, an external case assembled in this manner reliably connects the output terminals to the external case in a water-tight configuration.

The battery system of the present invention can have output terminal 7 metal rod 70 non-circular cylindrical sections 70B that have polygonal cylindrical shapes. Further, the non-circular cylindrical through-holes 26B in the external case 2 can have polygonal cylindrical shapes to insert the metal rod 70 non-circular cylindrical sections 70B in a manner that does not rotate. This battery system can reliably prevent output terminal rotation by insertion of the output terminal metal rod polygonal shaped non-circular cylindrical sections in the rotation preventing non-circular cylindrical through-holes in the external case. Therefore, this battery system has the characteristic that external leads can be easily and reliably connected to the output terminals while maintaining robust attachment of the output terminals to the output terminal lead-plates.

The battery system of the present invention can be installed on-board an electric powered vehicle. The above and further objects of the present invention as well as the features thereof will become more apparent from the following detailed description to be made in conjunction with the accompanying drawings.

### BRIEF DESCRIPTION OF THE DRAWINGS

Fig. 1 is an exploded oblique view showing one example of a prior art water-tight structure;
Fig. 2 is an oblique view of a battery system for an embodiment of the present invention;
Fig. 3 is an exploded oblique view of the battery system shown in Fig. 2;
Fig. 4 is an oblique view from behind of the battery system shown in Fig. 3;
Fig. 5 is an oblique view of the battery assembly of the battery system shown in Fig. 3;
Fig. 6 is an oblique view from the left side of the battery assembly shown in Fig. 5;
Fig. 7 is an exploded oblique view of the battery assembly shown in Fig. 5;
Fig. 8 is an exploded oblique view of the battery assembly shown in Fig. 7;
Fig. 9 is an enlarged cross-section view through the line IX-IX of Fig. 2 showing an output terminal of the battery system shown in Fig. 2;
Fig. 10 is an enlarged cross-section view through the line X-X of Fig. 2 showing an output terminal of the battery system shown in Fig. 2;
Fig. 11 is an enlarged oblique cross-section view showing an external case through-hole;
Fig. 12 is an exploded oblique view showing the connecting structure of an output lead-plate of the battery assembly shown in Fig. 5;
Fig. 13 is an exploded oblique view showing the connecting structure of an output lead-plate of the battery assembly shown in Fig. 6;
Fig. 14 is an enlarged oblique view of the metal rod that is an output terminal;
Fig. 15 is a circuit diagram of the battery system for an embodiment of the present invention;
Fig. 16 is an exploded oblique view showing the service plug detached from the external case;
Fig. 17 is an exploded oblique view of the service plug shown in Fig. 16;
Fig. 18 is an exploded oblique view from opposite side of the service plug shown in Fig. 17;
Fig. 19 is an enlarged cross-section view showing the connecting structure of the external case and the service plug; and
Fig. 20 is an enlarged cross-section view showing the connecting structure of the cover casing and the inner casing.

### DETAILED DESCRIPTION OF THE EMBODIMENT(S)

The following describes embodiments of the present invention based on the figures.

The battery system of the present invention is primarily installed on-board an electric motor-bike, and is most suitable as a power source to supply electric power to a motor for driving an electric scooter or motorcycle. However, the battery system of the present invention is not limited to use in an electric motor-bike and can also be installed as a power source used to drive an electric vehicle such as an electric automobile or an electrically powered bicycle. Further, the battery system of the present invention is not limited to use in an electric vehicle and can also be used as a power source for various electrical equipment that require high power output.

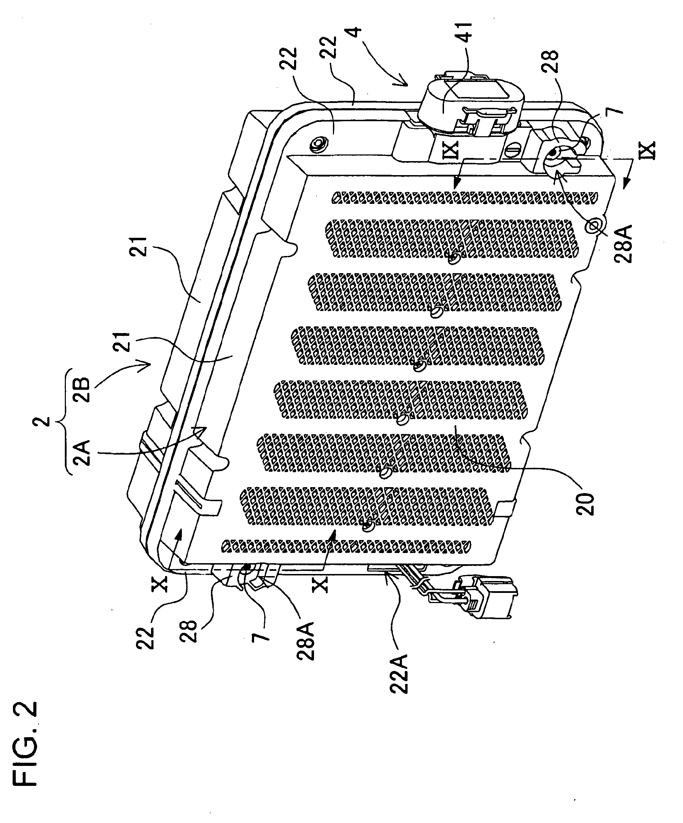

The battery system shown in Figs. 2-8 is provided with an external case 2 molded from insulating material in a water-tight construction housing a plurality of batteries 1, and a pair of output terminals 7 exposed from the surface of the external case 2 in a water-tight configuration and connected to the positive and negative output-sides of the batteries 1 inside. In the battery system of Figs. 2-4, the external case 2 houses a battery assembly 10 made up of a plurality of batteries 1. The battery assembly 10 has a plurality of batteries 1 that can be charged connected in series and parallel by lead-plates 3.

### [external case]

The external case 2 shown in Figs. 2-4 is a box-shaped enclosure that houses the battery assembly 10 in a water-tight configuration. The external case 2 is made of molded plastic. The external case 2 of the figures has rectangular surface plates 20, and perimeter walls 21 connecting those rectangular surface plates 20. Although the external case 2 shown in the figures has a structure that is sealed in a water-tight manner, an external case with a water-tight structure is not always a requirement. For example, the external case can be configured with a water discharging hole at the bottom to discharge any water that has entered from the bottom of the case.

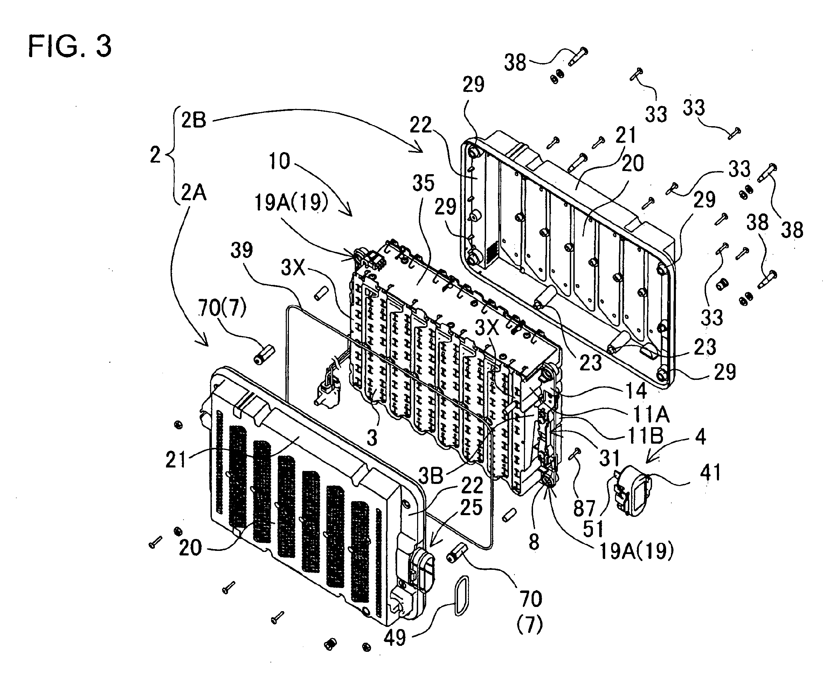

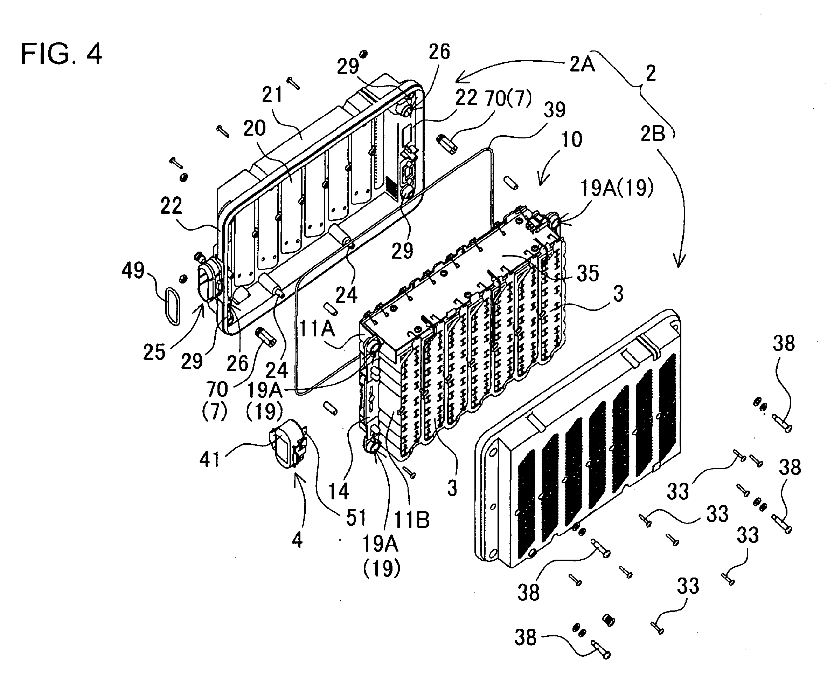

The external case 2 of Figs. 3 and 4 houses the battery assembly 10 in a manner that disposes each battery 1 perpendicular to the surface plates 20. This disposes electrodes 1A at the ends of the batteries 1 opposite the inside surfaces of the surface plates 20. A battery system that holds the battery assembly 10 in this configuration houses all the batteries 1 in parallel orientation. Since lead-plates 3 are connected to all the battery 1 electrodes 1A, the lead-plates 3 are disposed between the batteries 1 and the surface plates 20.

The external case 2 is molded from insulating plastic such as acrylonitrile-butadiene-styrene (ABS) resin, it is divided into two parts at the middle of the perimeter walls 21, and is connected together in a water-tight manner by screw-fastening. However, the two external case pieces can also be connected by techniques such as pressure fitting, thermal weld-attachment, or adhesive bonding. The external case 2 can be designed in various sizes and shapes depending on the battery system application, purpose, operating conditions, and the size, shape, and number of batteries employed.

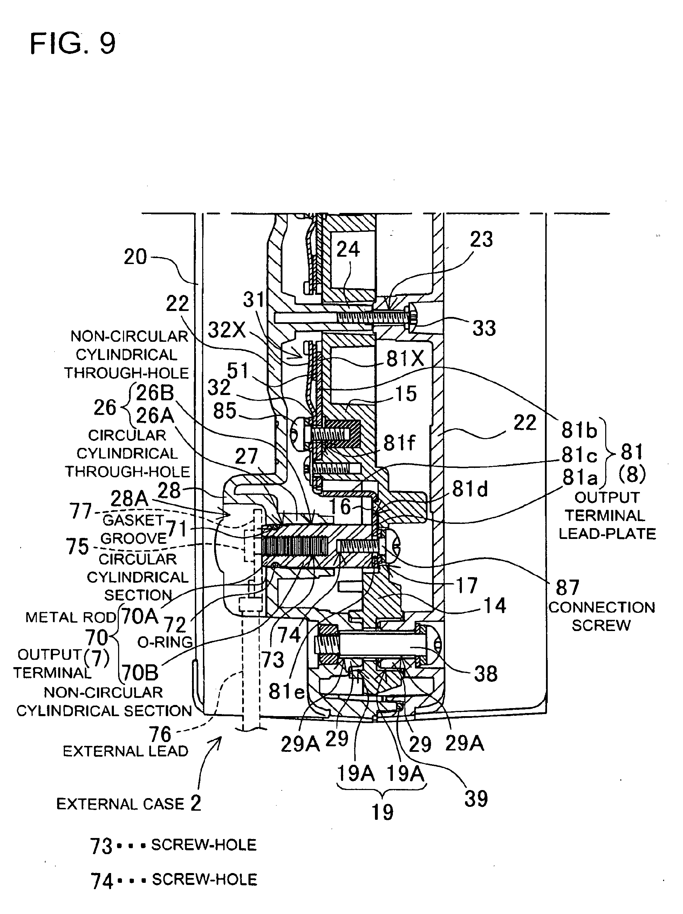

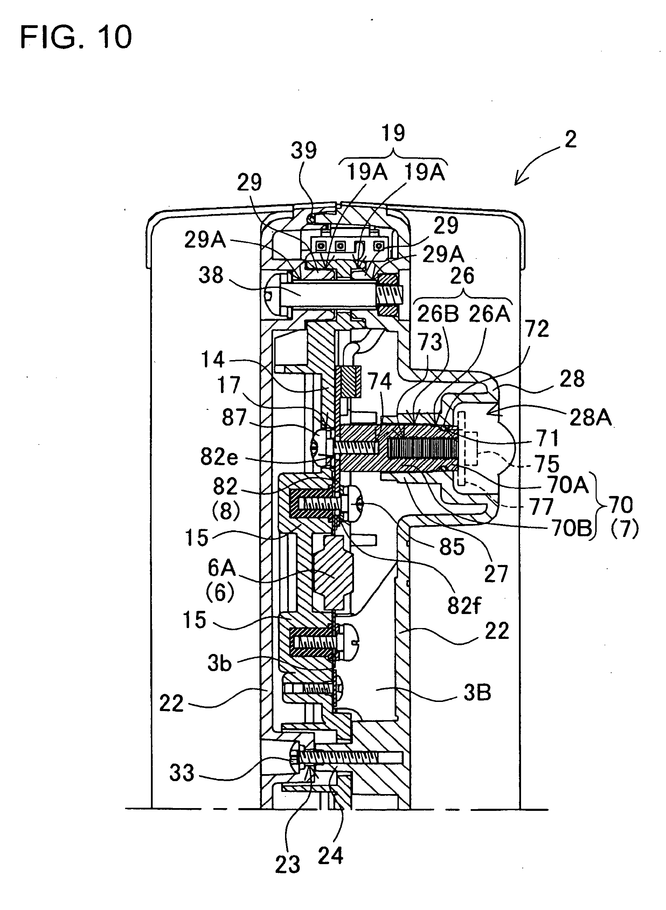

The external case 2 shown in Figs. 2-4 is divided into a first external case 2A and a second external case 2B. The first external case 2A and the second external case 2B are joined together with a gasket 39 intervening along the connecting surfaces of the perimeter walls 21 and fastened with case attachment screws 38 for a water-tight structure. Further, the external case 2 of the figures is provided with attachment extensions 22 projecting from the perimeter walls 21 at both ends to take output terminal lead-plates 8 from the battery assembly 10 to the outside. The external case 2 of Figs. 2-4 is provided with attachment extensions 22 outside the perimeter walls 21 on the short sides of the rectangular external case 2. As shown in Figs. 9 and 10, the attachment extensions 22 of the first external case 2A and the second external case 2B are provided with space to dispose the output terminal lead-plates 8. Further, the first external case 2A and the second external case 2B are molded in shapes that allow the gasket 39 to intervene between the two external case 2 pieces, which have perimeter wall 21 openings with the same shape, to allow screw-fastening and attachment in a water-tight structure. The first external case 2A and the second external case 2B are provided with screw-holes 23 to insert set screws 33 on one side, and bosses 24 to screw in the set screws 33 on the other side. These screw-holes 23 and bosses 24 are positioned at the center of the attachment extensions 22 (refer to Figs. 9 and 10), and along the long-side perimeter walls 21 that have no attachment extensions 22 on the first external case 2A and the second external case 2B (refer to Figs. 3 and 4). The screw-holes 23 for set screw 33 insertion on one side, and the bosses 24 for screw-fastening the set screws 33 on the other side are established protruding from the inside surfaces of the external case 2.

In addition, the external case 2 of Figs. 3 and 4 has case attachment screws 38 to join the first external case 2A and the second external case 2B at the four corners, which are the end regions of each attachment extension 22. The external case 2 is formed with integrated screw bosses 29 at both end regions of each attachment extension 22 to hold the battery assembly 10 in a fixed position. The external case 2 of Figs. 3 and 4 is provided with circular cylindrical screw bosses 29 that protrude from the inside surfaces of the attachment extensions 22. The circular cylindrical screw bosses 29 can be fit into attachment recesses 19A, which are attachment fittings 19 on the battery holder 11 of the battery assembly 10. The centers of the circular cylindrical screw bosses 29 have screw-holes 29A opened to accept case attachment screw 38 insertion (refer to Figs. 9 and 10).

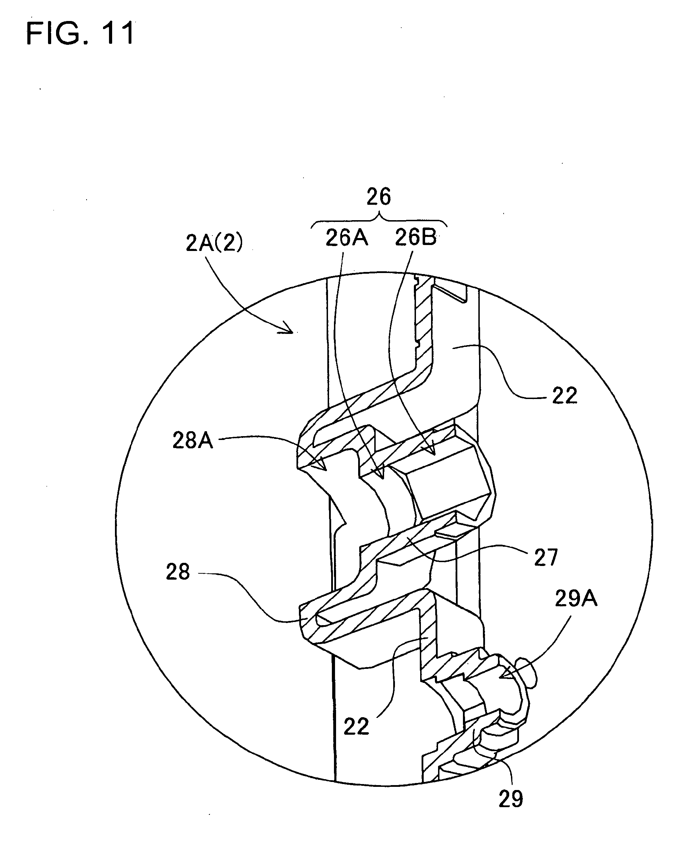

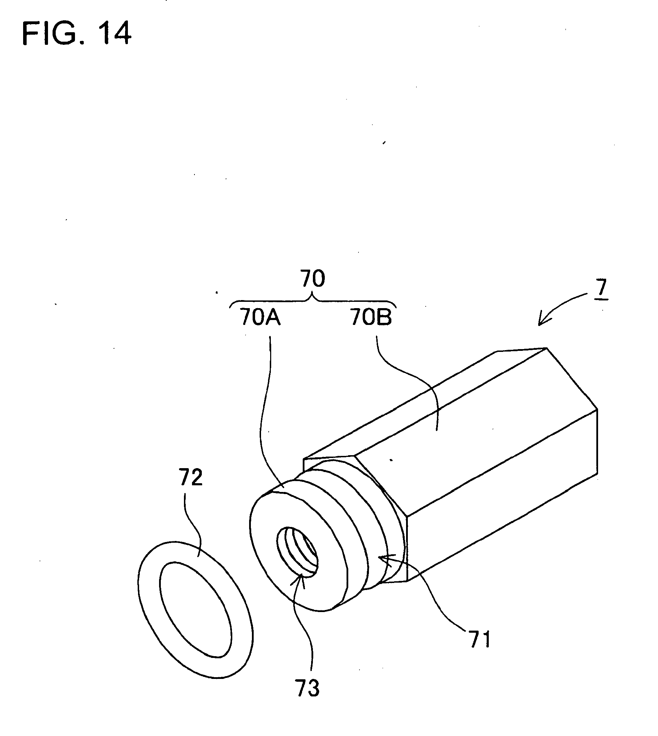

The external case 2 is also provided with through-holes 26 for insertion of the positive and negative output terminals 7. The external case 2 of Fig. 4 is provided with positive and negative output terminal 7 through-holes 26 through the attachment extensions 22 disposed at both ends. As shown in Figs. 11 and 14, metal rods 70, which are the output terminals 7, have circular cylindrical sections 70A that insert into circular cylindrical through-hole 26A sections of the through-holes 26. The through-holes 26 also have non-circular cylindrical through-hole 26B sections for insertion of non-circular cylindrical sections 70B of the metal rods 70 in a manner that prevents rotation. As shown in the external case 2 of Figs. 9-11, projecting cylinders 27 are formed in single-piece construction with the external case 2 in a manner projecting from the outside surfaces into the inside surfaces of the attachment extensions 22. The projecting cylinders 27 lengthen the through-holes 26 that have both circular cylindrical through-hole 26A sections and non-circular cylindrical through-hole 26B sections.

The external case 2 of Figs. 2, 9, and 10 is provided with connecting blocks 28 on the attachment extension 22 surfaces, which protrude from the perimeter walls 21, to establish the projecting cylinders 27. The projecting cylinders 27 are established in the connecting blocks 28, and the circular cylindrical through-holes 26A and non-circular cylindrical through-holes 26B are provided on the inside surfaces of the projecting cylinders 27. Further, the external case 2 of Figs. 2, 9, and 10 is provided with recesses 28A in the upper surfaces of the connecting blocks 28, and the through-holes 26 are opened in those recesses 28A. An external case 2 with output terminal 7 through-holes 26 opened inside recesses 28A in the connecting blocks 26 can dispose the external leads 76 for output terminal 7 electrical connection and set screws 75 screwed into the output terminals 7 at interior positions with respect to the surface plates 20. This can prevent exterior metal pieces from contacting the output terminals 7. In the external case 2 of Figs. 9 and 10, the upper surfaces of the connecting blocks 28 are disposed inward from the surface plates 20, and external lead 76 contact terminals 77 are disposed in the recesses 28A to position them at further interior positions.

### [battery assembly]

Figs. 3-8 show the battery assembly 10. The battery assembly 10 of the figures is provided with a plurality of batteries 1 that can be charged and are disposed next to each other in parallel orientation, a plastic battery holder 11 that disposes the batteries 1 in a plurality of rows and columns, and a plurality of lead-plates 3 weld-attached to electrodes 1A at the ends of each battery 1 disposed in the battery holder 11 to electrically connect adjacent batteries 1.

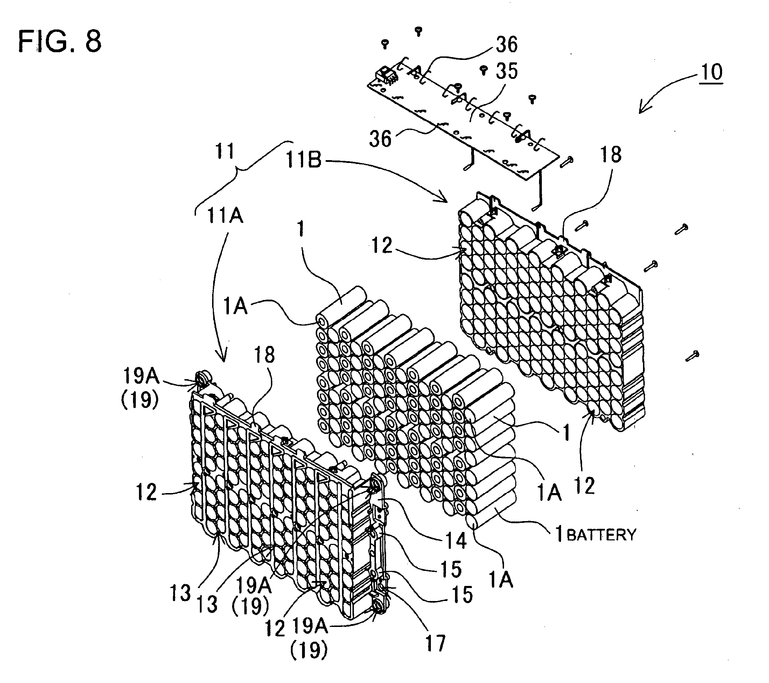

The batteries 1 of Fig. 8 are circular cylindrical batteries. A plurality of batteries 1 are arranged in multiple rows and columns with the electrodes 1A at each end of the batteries 1 positioned in common planes. The battery assembly 10 of Fig. 8 is an array of batteries 1 with eight horizontal rows and fourteen vertical columns. Specifically, one hundred and twelve batteries 1 are arranged in eight rows and fourteen columns. Batteries 1 in adjacent columns are shifted vertically to position batteries 1 in one column midway between batteries 1 in an adjacent column. This allows circular cylindrical batteries 1 to be arrayed in multiple columns in close proximity. However, the battery system of the present invention is not limited to a configuration having the number and arrangement of batteries described above. For example, batteries can also be disposed in a rectangular grid arrangement (with no column shifting).

### [batteries]

The batteries 1 are batteries that can be charged. Circular cylindrical batteries are used as the batteries 1 in the battery pack of the figures, although rectangular batteries and thin-outline batteries can also be used. In the present embodiment, circular cylindrical lithium ion batteries are used as the batteries 1. Lithium ion batteries are suitable for use in a high capacity, high output battery system. This is because lithium ion batteries can achieve high capacity-to-weight and capacity-to-volume ratios. However, the battery system of the present invention is not limited to the use of lithium ion batteries, and rechargeable batteries such as nickel-hydride batteries and nickel-cadmium batteries can also be used.

### [battery holder]

The battery assembly 10 shown in Fig. 8 has batteries 1 inserted in specified positions in battery holder 11 battery loading sections 12. As shown in Fig. 8, the battery holder 11 is formed in a shape that has circular cylindrical battery loading sections 12. The battery loading sections 12 are formed with interior shapes that can accept circular cylindrical battery insertion. The battery holder 11 of the figures is provided with one hundred and twelve battery loading sections 12 to insert batteries 1 in eight rows and fourteen columns. Both ends of the battery loading sections 12 are open.

The battery pack of Fig. 8 has a battery holder 11 that is divided into two pieces in the lengthwise direction of the cylindrical batteries 1 (left and right in the figure). The battery holder 11 is made up of a first battery holder 11A and a second battery holder 11B. The first battery holder 11A and the second battery holder 11B are formed with both ends of the battery loading sections 12 open to accept circular cylindrical batteries 1. The battery holder 11 is molded with an insulating material such as plastic. A battery holder 11 molded from plastic in a shape establishing battery loading sections 12 can dispose the plurality of batteries 1 in an array of separate compartments that accurately align those batteries 1 in specified positions. Further, by separating the batteries 1 in independent compartments, conditions that induce battery 1 thermal runaway can be avoided. The connected battery holder 11, which is molded as two pieces, exposes the electrodes 1A at the ends of the batteries 1 to the outside from the open ends of the battery loading sections 12. The lead-plates 3 are weld-attached to the exposed electrodes 1A by a technique such as spot-welding or laser-welding. Polycarbonate can be used as the battery holder 11 plastic material. This material has high strength and is not easily dissolved by lithium ion battery electrolyte that could leak from a battery. Conversely, ABS resin is easily dissolved by lithium ion battery electrolyte and its use is undesirable.

The battery holder 11 is provided with recessed regions 13 formed to hold lead-plates 3 in fixed positions at both open ends of the battery loading sections 12. The lead-plates 3 are inserted into the recessed regions 13 and connected to the electrodes 1A at the ends of the batteries 1. Consequently, the recessed regions 13 are positioned to dispose the lead-plates 3 for connection to the battery 1 electrodes 1A.

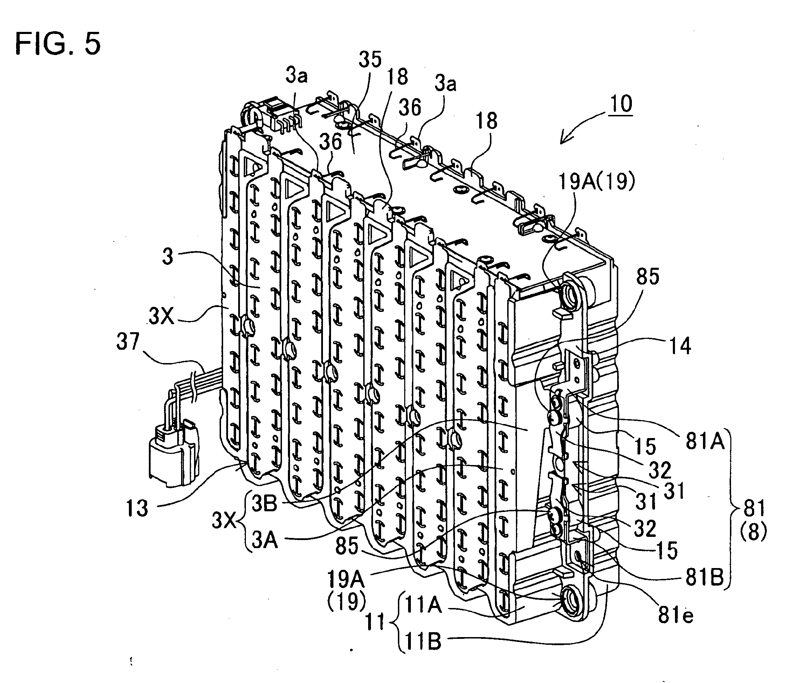

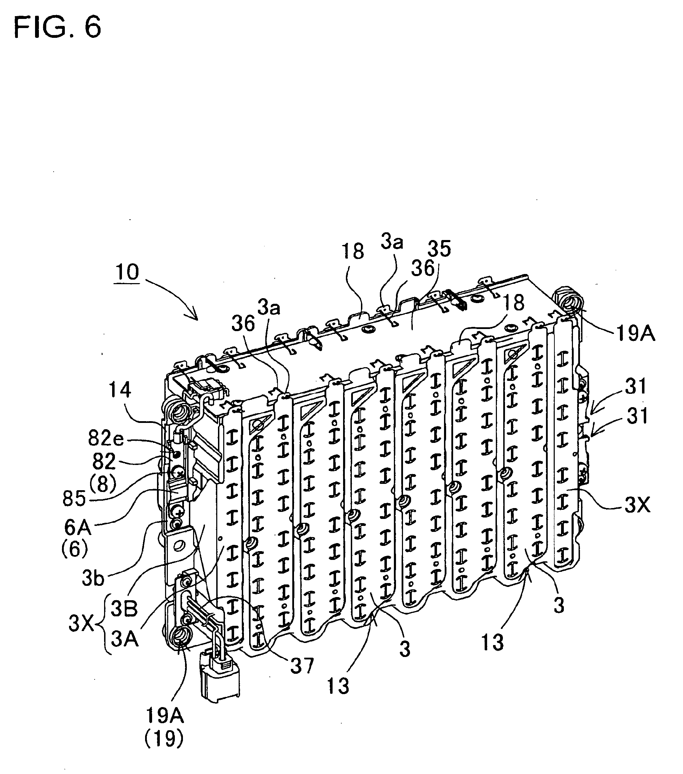

In addition, the first battery holder 11A is provided with attachment plates 14 at both ends (left and right ends of the battery holder 11 of Figs. 5 and 6) for attachment of output terminal lead-plates 8. The attachment plates 14 are disposed in planes parallel to the lead-plates 3 at the center of the narrow direction of the battery holder 11, which is the center of lengthwise direction of the circular cylindrical batteries 1. The attachment plates 14 are provided with attachment bosses 15 for attaching output terminal lead-plates 8 with set screws 85, and mounting projections 16 for attaching the output terminal lead-plates 8 in specified positions. Further, through-holes 17 are provided for connection screw 87 insertion to attach the output terminals 7 to the output terminal lead-plates 8.

As shown in Figs. 3-6, 9, and 10, both sides and both ends of the attachment plates 14 are also provided with case-mounting pieces 19 to dispose the battery holder 11 in a fixed position inside the external case 2. The case-mounting pieces 19 have case-mounting recesses 19A to mate with the screw bosses 29 of the external case 2, and the interiors are shaped to align and hold the circular cylindrical screw bosses 29 in fixed positions. The case-mounting recesses 19A, which are the case-mounting pieces 19, have through-holes established at their centers to pass the case attachment screws 38. The screw bosses 29 of the first external case 2A and the second external case 2B are inserted into the case-mounting pieces 19 provided on both sides of the battery holder 11 attachment plates 14 to connect the external case 2 in a fixed position. The first external case 2A and the second external case 2B are fastened with case attachment screws 38 to sandwich and hold the battery holder 11 in a fixed position inside the first external case 2A and the second external case 2B. The case attachment screws 38 pass through the first external case 2A, the second external case 2B, and the battery holder 11 to hold them together as a single unit.

### [lead-plates]

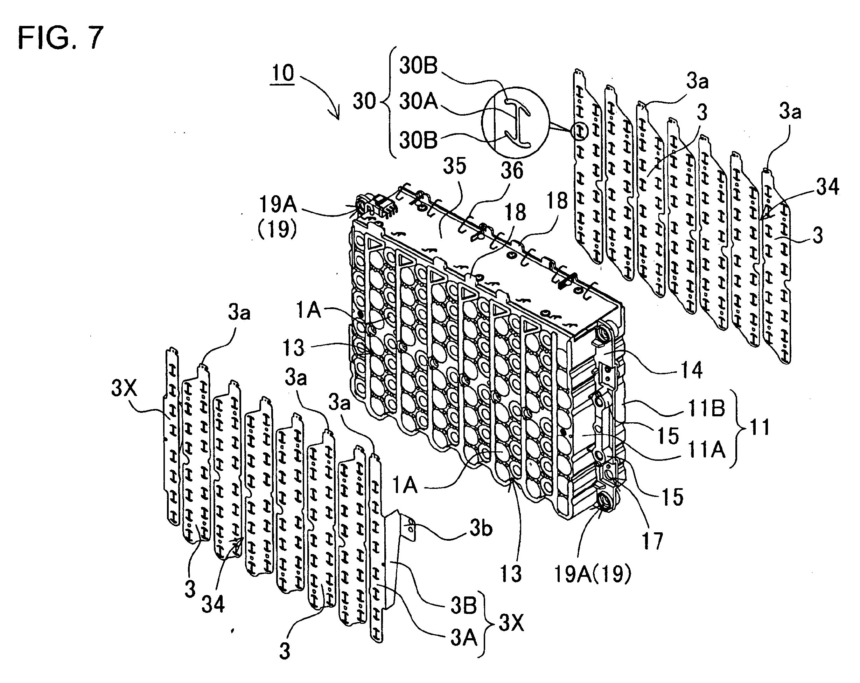

The lead-plates 3 are inserted into the battery holder 11 recessed regions 13 and spot-welded or laser-welded to the battery 1 electrodes 1A to connect adjacent batteries 1 in series and parallel. In the battery assembly 10 of Fig. 7, a plurality of lead-plates 3 is disposed in parallel orientation with an insulating gap 34 established between each lead-plate 3 and weld-attached to the battery 1 electrodes 1A.

The battery assembly 10 of Fig. 7 has seven columns of lead-plates 3 disposed at one end of the batteries 1 (upper right end in Fig. 7), and each lead-plate 3 is connected to two columns of batteries 1 with eight batteries 1 in each column. Eight columns of lead-plates 3 are disposed at the other end of the batteries 1 (lower left end in Fig. 7) with the lead-plates 3 at both sides acting as output lead-plates 3X that connect one column of eight batteries 1. The remaining six columns of lead-plates 3 connect two columns of batteries 1 with eight batteries 1 in each column. These lead-plates 3 connect the eight batteries 1 in one column in parallel, and connect batteries 1 in adjacent columns in series. Specifically, the one hundred and twelve batteries 1 are connected with eight batteries 1 in parallel and fourteen batteries 1 in series.

The battery assembly 10 of Figs. 5-7 has output lead-plates 3X connected to output terminals 7 at the positive and negative output-sides of the batteries 1. Each output lead-plate 3X is provided with an output extension 3B on a side edge to connect to an output terminal lead-plate 8. Each output lead-plate 3X has a band-shaped battery connecting section 3A that connects eight batteries 1 in parallel and a bent section on a side edge that is the output extension 3B disposed on a side of the battery holder 11 and connected to an output terminal lead-plate 8. The end of each output extension 3B is bent at a right angle and the bent end-section 3b is connected to an output terminal lead-plate 8. Since the output extension 3B of an output lead-plate 3X is formed in a wide plate-shape, the electrical resistance of the output extension 3B can be made small.

The lead-plates 3 are made from sheet-metal with low electrical resistance and superior thermal conductivity. For example, nickel, iron, steel, copper, and copper alloys in sheet-metal form can be plated with a metal such as nickel and used as the lead-plates 3. A sheet-metal thickness that is optimum for weld-attachment, for example, 0.1 mm to 0.3mm sheet-metal can be used as the lead-plates 3. If the lead-plates 3 are too thick or too thin, they cannot be spot-welded or laser-welded to the electrodes 1A at the ends of the batteries 1 with an ideal weld-attach. Since a lead-plate that is too thick requires a large amount of thermal energy for heating and fusing, detrimental effects on the batteries increase. Conversely, a lead-plate that is too thin has high electrical and thermal resistance, and does not have sufficient mechanical strength. Therefore, lead-plate thickness is set to an optimum value considering the amount of current flow and the type of application.

The lead-plates 3 of Fig. 7 are provided with slits 30 in locations that are spot-welded to the battery 1 electrodes 1A to reduce the flow of ineffective welding current. The lead-plates 3 of Fig. 7 are provided with vertical slits 30A, and horizontal slits 30B connected to the vertical slits 30A at the top and bottom the vertical slits 30A. Spot-welding electrodes are pressed onto both sides of a vertical slit 30A to weld-attach the lead-plate 3 on both sides of the vertical slit 30A to an electrode 1A at the end of a battery 1. Lead-plates 3 weld-attached to the battery 1 electrodes 1A connect the batteries 1 in a reliable manner. Further, the lead-plates 3 have extensions 3a established at their upper ends for connection to a circuit board 35. The lead-plate 3 extensions 3a are connected to the circuit board 35 via leads 36.

### [output terminal lead-plates]

The output terminal lead-plates 8 are thick sheet-metal with a lower electrical resistance than the lead-plates 3. For example, the output terminal lead-plates 8 are nickel, iron, steel, copper, or copper sheet-metal plated with a metal such as nickel. The output terminal lead-plates 8 are attached via set screws 85 to the surfaces of the attachment plates 14 provided at both ends of the first battery holder 11A

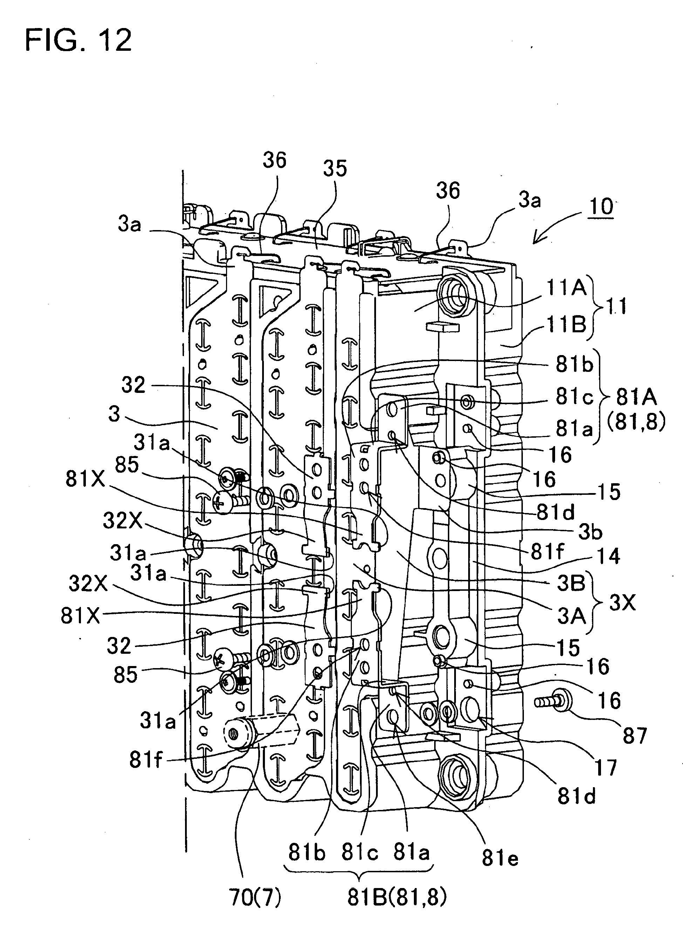

In Figs. 5 and 12, the output terminal lead-plate 8 mounted on the attachment plate 14 on the right side of the battery holder 11 is a pair of metal lead-plate pieces 81. The lead-plate pieces 81 are a first lead-plate 81A that connects to the output extension 3B of the output lead-plate 3X, and a second lead-plate 81 B that connects to the output terminal 7. The output terminal lead-plate 8 shown in Fig. 12 is the pair of lead-plate pieces 81, which are bent in Z-shapes. Each Z-shaped lead-plate piece 81 is provided with an attachment section 81 a, an upright section 81 c, and a connection section 81 b. The attachment sections 81 a are provided with mounting holes 81 d that mate with the mounting projections 16 established on the surface of the attachment plate 14. The mounting projections 16 align and insert into the mounting holes 81d to dispose the attachment sections 81 a in fixed positions. Further, the attachment section 81 a of the second lead-plate 81 B is provided with a through-hole 81 e to pass the connection screw 87 that attaches the metal rod 70, which is the output terminal 7. The connection screw 87 is passed through the through-hole 17 in the attachment plate 14, inserted through the through-hole 81e in the attachment section 81 a, and screwed into the screw-hole 74 in the metal rod 70 to attach the output terminal lead-plate 8 to the metal rod 70. The connection sections 81 b are provided with through-holes 81f for insertion of set screws 85 that screw into attachment bosses 15 established in the attachment plate 14. The set screws 85 are inserted through the through-holes 81f and screwed into the attachment bosses 15 to attach the output terminal lead-plates 8 to the attachment plate 14. Further, the connection sections 81 b of the first lead-plate 81A and the second lead-plate 81 B are electrically connected by the service plug 4 to connect the output terminal 7 with the output lead-plate 3X.

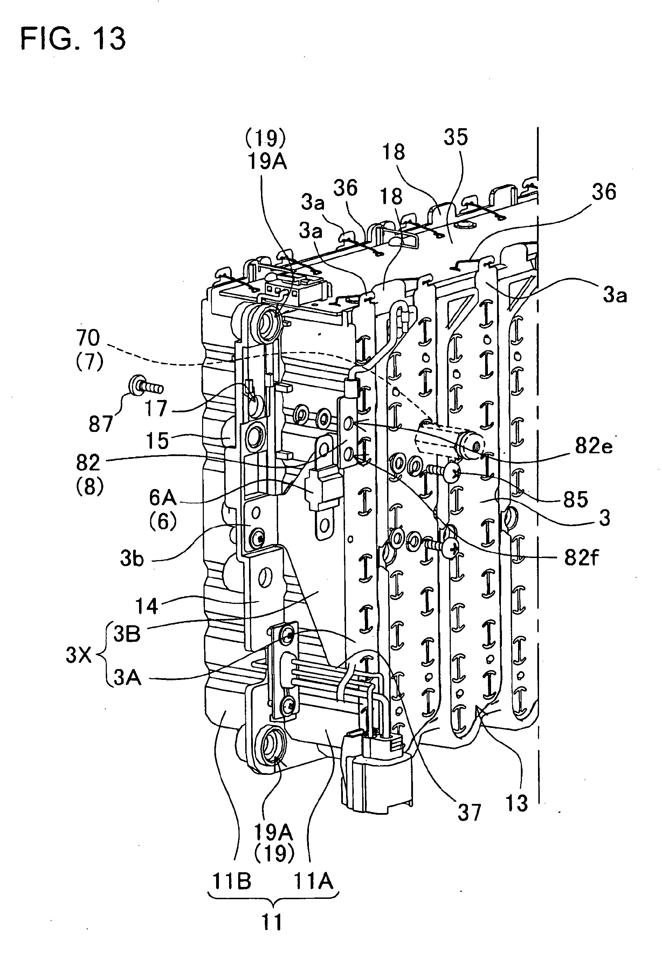

In Figs. 6 and 13, the output terminal lead-plate 8 mounted on the attachment plate 14 on the left side of the battery holder 11 is a single metal lead-plate piece 82. As shown in Figs. 10 and 13, the lead-plate piece 82 is provided with a through-hole 82e to pass the connection screw 87 that attaches the metal rod 70, which is the output terminal 7. The connection screw 87 is passed through the through-hole 17 in the attachment plate 14, inserted through the through-hole 82e in lead-plate piece 82, and screwed into the screw-hole 74 in the metal rod 70 to attach the output terminal lead-plate 8 to the metal rod 70. Further, the lead-plate piece 82 is provided with a through-hole 82f for insertion of a set screw 85 that screws into an attachment boss 15 established in the attachment plate 14. The set screw 85 is inserted through the through-hole 82f and screwed into the attachment boss 15 to attach the output terminal lead-plate 8 to the attachment plate 14. This output terminal lead-plate 8 has one end connected to the output terminal 7, and the other end connected through a protection device 6 to the output lead-plate 3X. The protection device 6 is a fuse 6A that fuses open with excessive current flow. However, the protection device 6 can also be a device that can cut-off excessive current flow such as a circuit breaker, or a positive thermal coefficient (PTC) current limiting device.

### [output terminals]

The output terminals 7 are metal rods 70 that are metals such as nickel, iron, steel, copper, or copper plated with a metal such as nickel and processed into long thin metal rod shapes. Each output terminal 7 metal rod 70 is made up of a circular cylindrical section 70A that has a circular or elliptical cylindrical shape, and a non-circular cylindrical section 70B that has a non-circular cylindrical shape. The metal rod 70 of Fig. 14 has a circular cylindrical section 70A front end with a non-circular cylindrical section 70B remaining region that has a polygonal cylindrical shape that is a hexagonal cylindrical shape. The circular cylindrical section of the metal rod does not necessarily have to be a circular cylindrical shape, and can be an elliptical cylindrical shape as well. Further, the non-circular cylindrical section does not necessarily have to be a polygonal cylindrical shape, and it can be also be a shape such as an elliptical cylindrical shape. In addition, the non-circular cylindrical section 70B of an output terminal 7 metal rod 70 has a maximum outline (equivalent outside diameter) that is larger than the maximum outline (outside diameter) of the circular cylindrical section 70A. The metal rod 70 of Fig. 14 has a circular cylindrical section 70A with a diameter that is smaller that the diameter of an inscribed circle in the polygonal cylindrical non-circular cylindrical section 70B.

Each output terminal 7 metal rod 70 is provided with a gasket groove 71, and an O-ring 72 is disposed in that gasket groove 71. As shown in Figs. 9 and 10, with the circular cylindrical section 70A of each metal rod 70 inserted in a circular cylindrical through-hole 26A, each O-ring 72 is disposed in a pressure-fit manner between the circular cylindrical section 70A and the circular cylindrical through-hole 26A. This closes the gap between each circular cylindrical section 70A and circular cylindrical through-hole 26A in a water-tight configuration. The outside diameter of each circular cylindrical section 70A is smaller than the inside diameter of each circular cylindrical through-hole 26A, and a very small gap is established between the circular cylindrical section 70A and the circular cylindrical through-hole 26A. For example, the gap between the circular cylindrical section 70A and the circular cylindrical through-hole 26A is 0.1 mm to 0.5mm, and this gap is closed-off in a water-tight configuration by the O-ring 72 gasket. The thickness of the O-ring 72 is greater than the distance from the bottom of the gasket groove 71 to the inside surface of the circular cylindrical through-hole 26A. The O-ring 71 is squeezed between the bottom of the gasket groove 71 and the inside surface of the circular cylindrical through-hole 26A, and this closes-off the gap between the circular cylindrical section 70A and the circular cylindrical through-hole 26A in a water-tight configuration. Further, the outside of each non-circular cylindrical section 70B is slightly smaller than the inside of each non-circular cylindrical through-hole 26B to allow smooth insertion of each metal rod 70 into a circular cylindrical through-hole 26A.

The output terminal 7 metal rods 70 are provided with screw-holes 73, 74 at both ends. As shown in Figs. 9 and 10, external lead 76 contact terminals 77 are connected by set screws 75 in the screw-holes 73 at the front ends of the metal rods 70. Output terminal 7 metal rods 70 are attached to the output terminal lead-plates 8 by connection screws 87 in the screw-holes 74 at the rear ends of the metal rods 70.

The metal rods 70, which are the output terminals 7, have an overall length that allows attachment of the rear ends to the output terminal lead-plates 8, and allows exposure of the front ends from the surface of the external case 2. Further, the length of the metal rods 70 allows protrusion of the front ends from the bottoms of the recesses 28A in the connecting blocks 28 established outside the perimeter walls 21 of the external case 2. An output terminal 7, which has a front end that protrudes out from the bottom of a connecting block 28 recess 28A, allows reliable attachment of an external lead 76 contact terminal 77. This is because an external lead 76 contact terminal 77 can contact the surface of the front end of the output terminal 7 metal rod 70 for solid attachment via a set screw 75 without touching the bottom of the recess 28A.

### [circuit board]

The circuit board 35 that is connected to each lead-plate 3 has electronic parts mounted to implement battery 1 charging control circuitry, protection circuitry, and remaining battery capacity computation circuitry. In addition, the circuit board 35 acquires and computes various data such as remaining capacity, abnormal conditions, discharge suspension (commands), and charging suspension (commands). These data are transmitted via lead wires 37 to the electrical equipment that is supplied with power from the battery system (for example, an electric powered two-wheeled vehicle). The electrical equipment performs various control operations based on these data. In the external case 2 shown in Fig. 2, the attachment extension 22 on one side (the left side in Fig. 2) is provided with a lead wire opening 22A to pass the lead wires 37. The lead wires 37 are run to the outside through the lead wire opening 22A.

As shown in Figs. 5-8, the circuit board 35 is attached to the upper surface of the battery holder 11. The battery holder 11 is provided with a plurality of alignment ribs 18, which are formed in single-piece construction with the battery holder 11, around the circuit board 35 to align the circuit board 35 in a specified position. The circuit board 35 is guided into a specified position surrounded by the alignment ribs 18 on the upper surface of the battery holder 11, and fastened in that position by screws.

The protection circuitry mounted on the circuit board 35 is circuitry such as a circuit to detect battery 1 over-charging and over-discharging and to control current, and a circuit to detect battery over-charging and cut-off current. To detect battery 1 over-charging and over-discharging, the protection circuitry is provided with a voltage detection circuit (not illustrated) that detects battery 1 voltage. The voltage detection circuit detects the voltage of the batteries 1 via the lead-plates 3 and prevents over-charging and over-discharging.

### [service plug]

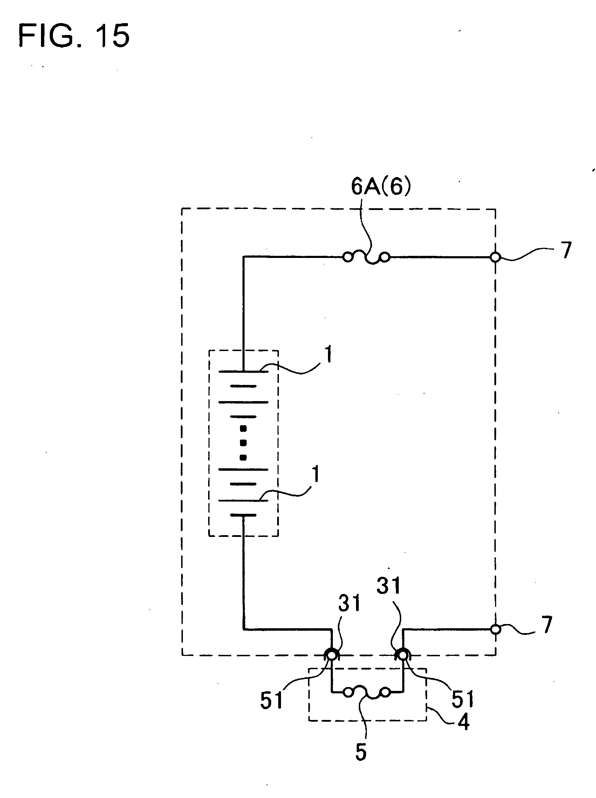

As shown in the circuit diagram of Fig. 15, the service plug 4 is connected on one side of the output in series with the plurality of batteries 1. When the service plug 4 is inserted in the external case 2, the series-connected batteries 1 are connected via the fuse 5 housed in the service plug 4. When the service plug 4 is removed from the external case 2, one end of the connected batteries 1 is opened and no voltage is established across the positive and negative output terminals 7. The service plug 4 is removed until the battery system is installed in an electric vehicle. The service plug 4 is also removed when maintenance work is performed to prevent output of high voltage from the output terminals 7. The service plug 4 is inserted in the external case 2 when the battery system is installed for use in an electric vehicle.

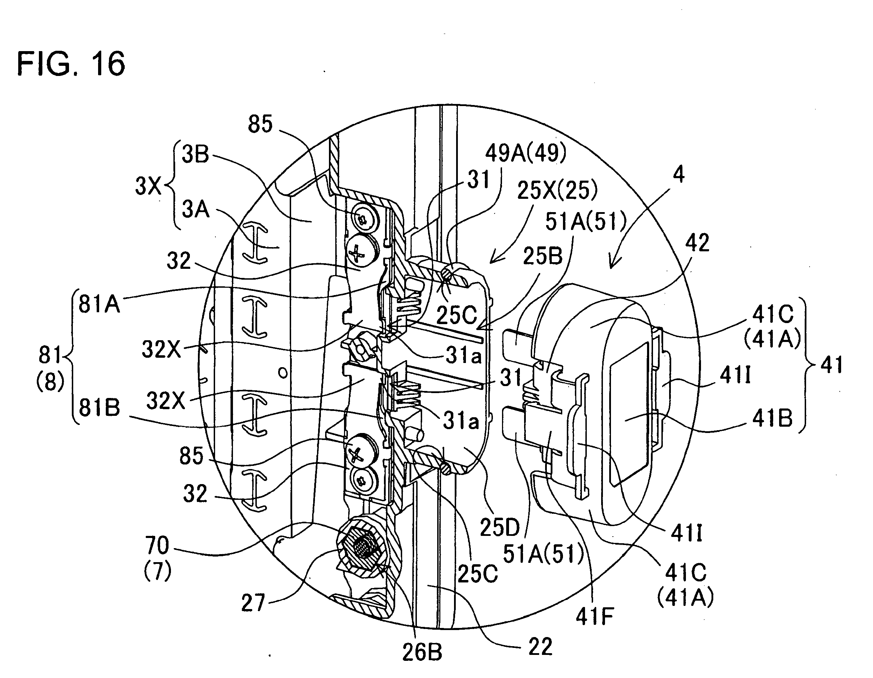

The service plug 4 is shown in Figs. 16-20. The service plug 4 is provided with a plastic plug case 40 that connects to the external case 2 in a detachable manner, a fuse 5 housed inside the plug case 40, and a pair of connecting terminals 51 connected to the fuse 5. The plug case 40 is provided with a cover casing 41 having a cylindrical region 41A that mates with the plug connecting section 25, and an inner casing 42 attached to the inside of the cover casing 41 cylindrical region 41A to hold the fuse 5.

The cover casing 41 is formed from plastic as a single-piece having a long narrow cover cap 41 B with semicircular end regions, and cylindrical side-walls 41C established around the cover cap 41 B. The cover cap 41 B is provided with connecting bosses 41 D at both ends to connect the inner casing 42. The connecting bosses 41 D have circular cylindrical shapes and project vertically from the inside surface of the cover cap 41 B. The ends of the connecting bosses 41 D are provided with screw-holes 41 E to screw in set screws 43.

The cover casing 41 is provided with locking hooks 41 F on both sides of the cylindrical side-walls 41C. The cylindrical side-walls 41C are formed in a cylindrical shape with smooth inside surfaces, and are formed with tapered inside surfaces that become wider towards the open end of the cover casing 41. The tapered cylindrical side-walls 41C can smoothly connect with the plug connecting section 25 on the external case 2 and make a more reliable water-tight connection via the gasket 49. This is because when the plug connecting section 25 is inserted into the cylindrical side-walls 41C, the interior of the cylindrical side-walls 41C gradually becomes smaller with insertion, and compression of the gasket 49 gradually increases. However, the cylindrical side-walls can be formed with a straight cylindrical inside shape as well.

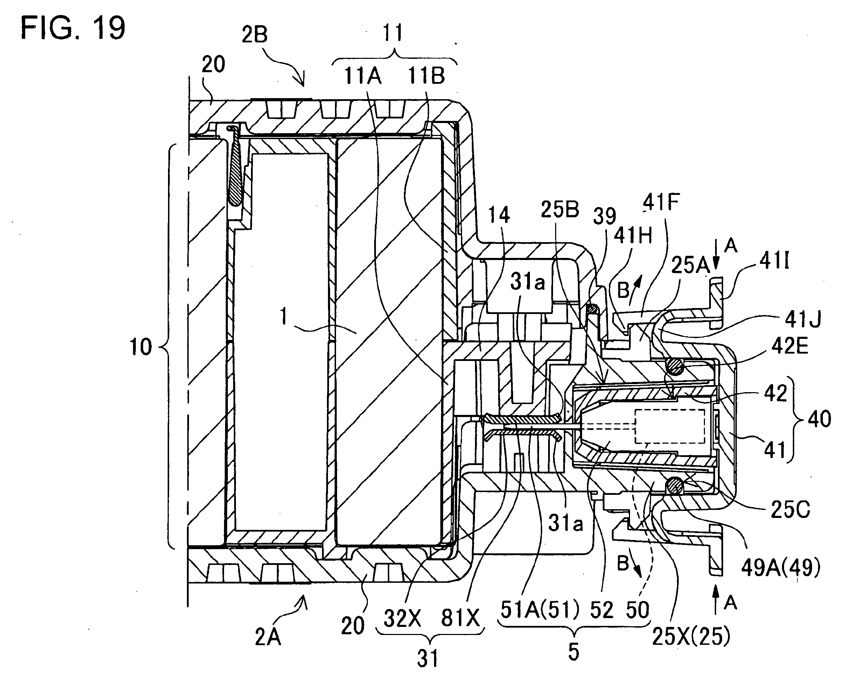

The locking hooks 41 F lock into locking catches 25A established on the external case 2 to reliably attach the service plug 4 to the external case 2. The locking hooks 41 F connect to the cylindrical side-walls 41C through a pair of flexible arms 41 G. The flexible arms 41 G are formed in J-shapes that dispose the locking hooks 41 F in a manner that allows the locking hooks 41 F to flexibly angle outward from the cylindrical side-walls 41C. Further, the insides of the front ends of the locking hooks 41 F are provided with hook projections 41H that lock into the locking catches 25A on the external case 2. The back ends of the locking hooks 41 F are provided with release tabs 41 to move the locking hooks 41 F outward and detach the service plug 4 from the external case 2. When the release tabs 41 are squeezed towards the cylindrical side-walls 41C, the locking hooks 41 F are moved in a direction to release the front end hook projections 41H from the external case 2 locking catches 25A. By squeezing the release tabs 41 established on both sides of the cover casing 41 in the direction of the arrows A in Fig. 19, and pressing both release tabs 41 towards the cylindrical side-walls 41C. the locking hooks 41 F on both sides move in the direction shown by the arrows B in Fig. 19 allowing the service plug 4 to be easily detached from the external case 2. When the release tabs 411 are not squeezed together, the hook projections 41H on the ends of the locking hooks 41 F are latched into the external case 2 locking catches 25A, and the service plug 4 is solidly attached to the external case 2.

The inner casing 42 is molded as a single-piece having rectangular cylindrical enclosure walls 42C to contain a fuse 5 inside, and a base plate 42B that connects the base of the enclosure walls 42C. Connecting holes 42D are established outside both ends of the inner casing 42 enclosure walls 42C to pass the connecting bosses 41 D provided on the cover casing 41. The connecting bosses 41 D are passed through the connecting holes 42D and set screws 43 are screwed into the connecting bosses 41 D to connect the inner casing 42 in a given location in the cover casing 41. The outline of the inner casing 42, or more specifically the outline of the enclosure walls 42C, is formed in a shape that can fit into the plug recess 25B provided in the external case 2 plug connecting section 25.

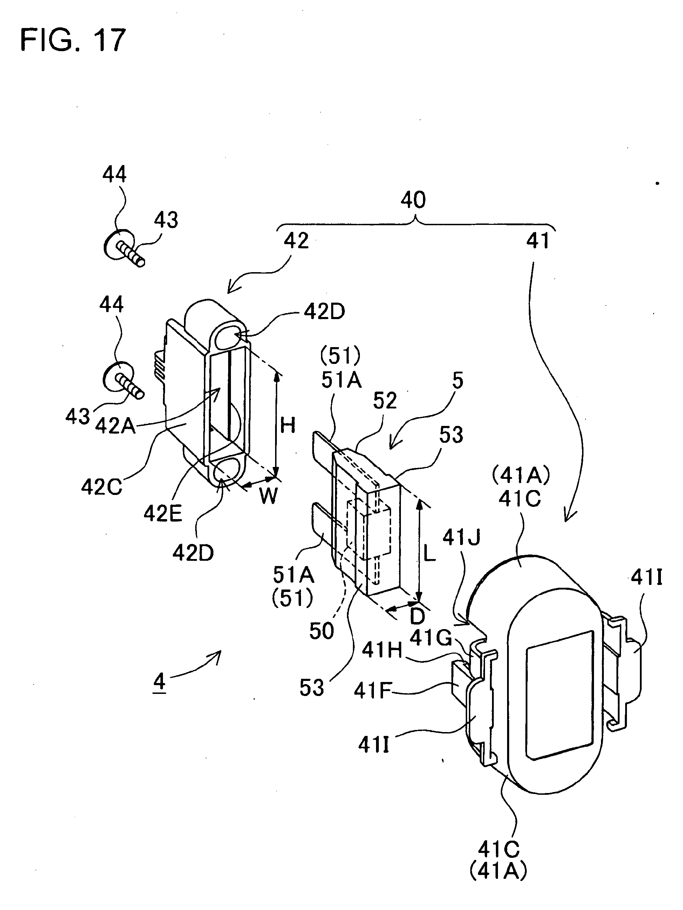

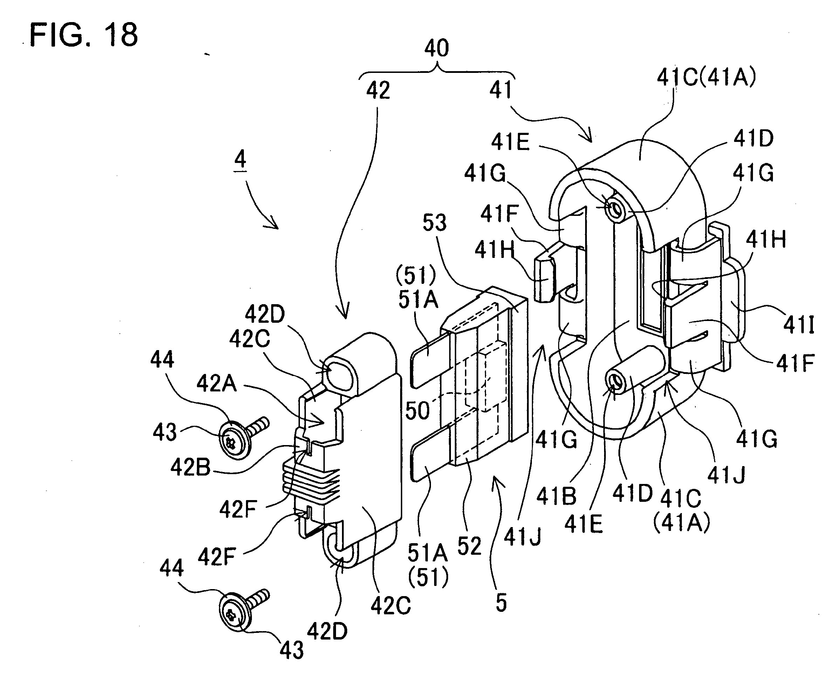

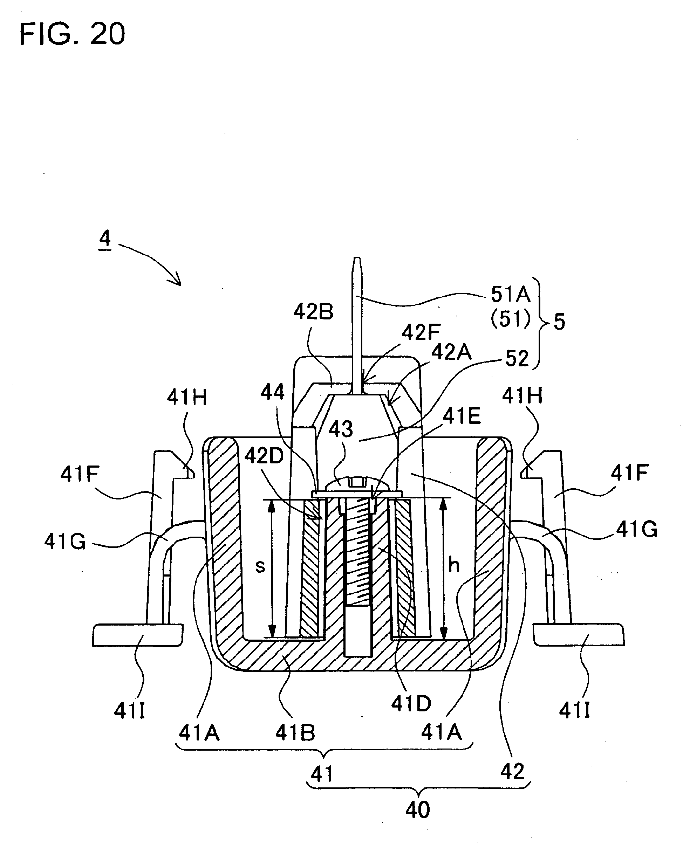

In addition, the inner casing 42 is connected to the cover casing 41 in a floating structure that connects the fuse 5 connecting terminals 51 to the plug case 40 in a floating configuration. Here, the insides of the inner casing 42 connecting holes 42D are made larger than the outside diameters of the connecting bosses 41 D to join the inner casing 42 to the cover casing 41 in a floating configuration. The inner casing 42 of Figs. 17 and 18 has long connecting holes 42D shaped as elongated circles, and the connecting bosses 41 D inserted through the connecting holes 42D can move inside those elongated circular shaped holes. This allows relative movement of the inner casing 42 with respect to the cover casing 41. For the inner casing 42 to move smoothly inside the cover casing 41, the connecting bosses 41 D must move smoothly inside the connecting holes 42D. Therefore, the height (h) of the connecting bosses 41 D of the plug case 40 shown in Fig. 20 is made somewhat longer than the axial length (s) of the connecting holes 42D, and the set screws 43 are screwed into the connecting bosses 41 D through wide-brimmed washers 44. The outline of the wide-brimmed washers 44 is made larger than the inside of the connecting holes 42D to prevent the connecting holes 42D at both ends of the inner casing 42 from coming off the connecting bosses 41 D.

The long dimension of the elongated circular connecting holes 42D of the inner casing 42 of the figures is established in the direction of the plug blade 51A thickness. The inside diameter of the connecting holes 42D in the direction of the plug blade 51A width, which is perpendicular to the thickness direction, is made essentially equal to the outside diameter of the connecting bosses 41 D, or is made slightly larger than the outside diameter of the connecting bosses 41 D. The inside dimension of the connecting holes 42D is made greater than the outside diameter of the connecting bosses 41 D in the thickness direction of the plug blades 51A, and the connecting bosses 41 D inserted through the connecting holes 42D can move relative to the connecting holes 42D in the thickness direction of the plug blades 51A. This structure establishes a floating configuration that allows the connecting terminals 51 to move inside the plug case 40 in the thickness direction of the plug blades 51A. The inside dimension of the connecting holes 42D in the elongated direction can be made, for example, 1.05 to 3 times the outside diameter of the connecting bosses 41 D, and preferably 1.1 to 2 times the outside diameter of the connecting bosses 41 D for an ideal connecting terminal 51 floating configuration. Further, a floating configuration can also be established that allows the connecting terminals to move in the width direction of the plug blades. Here, the inside dimension of the connecting holes is made greater than the outside diameter of the connecting bosses in the width direction of the plug blades. This establishes a floating configuration that allows relative movement of the connecting bosses inside the connecting holes in the width direction of the plug blades. A floating configuration that allows movement of the connecting terminals 51 in the thickness direction of the plug blades can connect the connecting terminals 51 in the receptacles 31 in an ideal state. Further, a floating configuration that allows movement of the connecting terminals 51 in both the thickness and width directions of the plug blades can also connect the connecting terminals 51 in the receptacles 31 in an ideal state while allowing connection in an ideal water-tight manner. In the battery system of the present invention, a floating configuration that allows movement of the connecting terminals 51 in the plug blade 51A thickness direction only can connect the connecting terminals 51 in the receptacles 31 in an ideal manner with no excessive effort. Therefore, a floating configuration that allows movement only in the thickness direction can be employed.

The inner casing 42 is provided with a fuse 5 compartment 42A established by the base plate 42B and the enclosure walls 42C. The depth of the fuse compartment 42C is large enough to hold the fuse 5 inside. As shown in Fig. 17, the inside width (W) of the fuse compartment 42A, which is the narrow distance between the pair of parallel opposing enclosure walls 42C, is made essentially equal to the thickness (D) of the fuse 5, or is made slightly larger. In addition, the inside length (H) of long side of the fuse compartment 42A is made essentially equal to the long dimension (L) of the fuse 5, or is made slightly larger to allow the fuse 5 to be held in a fixed position inside the fuse compartment 42C. The inside of the inner casing 42 shown in Figs. 17 and 19 is provided with stepped recesses 42E at the open end of the enclosure walls 42C. The stepped recesses 42E accept insertion of the detachment ridges 53 established on both sides of the fuse 5.

As shown in Fig. 18, both sides of the base plate 42B are provided with insertion regions 42F to enable smooth insertion and retraction of the connecting terminal 51 plug blades 51A connected to the fuse 5. Since the service plug 4 connecting terminals 51 of the figures are metal-plate plug blades 51A, the insertion regions 42F are slit-shaped. Since the service plug 4 has a pair of plug blades 51A disposed in a common plane, the pair of slit-shaped insertion regions 42F is disposed in a straight-line. The pair of insertion regions 42F disposed in a straight-line is a pair of slits long enough to align the inside sections of the pair of plug blades 51A while guiding opposing outside sections to project outside. The width of the slit-shaped insertion regions 42F, which is perpendicular to the long dimension of the slits, is made essentially equal to the thickness of the connecting terminal 51 plug blades 51A, or is made slightly larger to dispose the connecting terminal 51 plug blades 51A in specified positions inside the inner casing 42. Further, the distance between the slit-shaped insertion regions 42F is essentially equal to the distance between connecting terminal 51 plug blades 51A. This disposes the connecting terminals 51 inside the inner casing 42 in a manner that does not shift in the direction of the blade width. However, the width of the base plate of the inner casing can also be extended to the width of the pair of connecting terminals, and the slit-shaped insertion regions can extend to both sides of the base plate to allow smooth insertion and retraction of the plug blades. Here, the length of the insertion region slits is made essentially equal to the lateral width of the connecting terminals to allow insertion of the connecting terminals in a manner that does not shift laterally (in the width direction).

The fuse 5 is provided with a fuse element 50 that has connecting terminals 51 connected at both ends, and a fuse holder 52 that retains the fuse element 50. The fuse element 50 is a device that fuses open with excessive current. The fuse element 50 has a specified fusing current set lower than that of the previously described protection device 6 fuse 6A. If excessive current flows in a battery system of this configuration, the fuse element 50 in the service plug 4 will fuse open to cut-off current before the protection device 6 fuse 6A can fuse open. Consequently, current can be cut-off without fusing open the protection device 6 fuse 6A. A fuse 5 that has fused open can be replaced by exchanging the service plug 4 for one having a new fuse. This type of fuse 5 is generally an off-the-shelf commercially available item.

The fuse holder 52 is made of plastic and contains a fuse element 50 inside. The plug blades 51A of the connecting terminals 51 are connected to both ends of the fuse element 50 and insertion molded in fixed positions in the fuse holder 52. The connecting terminal 51 plug blades 51A are metal plates held in the fuse holder 52 with the pair of plug blades 51A in a common plane. The fuse holder 52 of the fuse 5 is housed in the inner casing 42 fuse compartment 42A with the connecting terminal 51 plug blades 51A inserted through the slit-shaped insertion regions 42F to project to the outside.

The service plug 4 described above connects the inner casing 42, which houses the fuse 5, to the cover casing 41 in a floating configuration that allows the inner casing 42 to move with respect to the cover casing 41. This connects the connecting terminals 51 in a floating configuration in the plug case 40. However, although not illustrated, the connecting terminals can also be connected in a floating configuration in the plug case by housing the fuse in a floating configuration in the inner casing.

In this type of floating configuration, the fuse can be housed inside the inner casing fuse compartment in a floating manner. The depth of the fuse compartment is made slightly larger than the length of the fuse in the direction of insertion to allow the fuse to move freely inside. In addition, the inside width (W) of the fuse compartment, which is the narrow distance between the pair of parallel opposing enclosure walls, is made larger than the thickness (D) of the fuse. This holds the connecting terminal plug blades, which are connected to the fuse, in a floating configuration that allows movement in the direction of the plug blade thickness. Further, the inside length (H) of long side of the fuse compartment enclosure walls can be made longer than the long dimension (L) of the fuse to establish a floating configuration that allows the connecting terminals to move in the lateral width direction of the plug blades, which is perpendicular to the thickness direction. A floating configuration that allows movement of the connecting terminals in the thickness direction of the plug blades can connect the connecting terminals in the receptacles in an ideal state. Further, a floating configuration that allows movement of the connecting terminals in both the thickness and width directions of the plug blades can also connect the connecting terminals in the receptacles in an ideal state while allowing connection in an ideal water-tight manner. In this battery system, since a floating configuration that allows movement of the connecting terminals in the plug blade thickness direction only can connect the connecting terminals and receptacles in an ideal manner with no excessive effort, a floating configuration allowing movement only in the thickness direction can be adopted.

Further, the slit-shaped insertion regions provided on both sides of the inner casing base plate can be made wider than the thickness of the connecting terminal plug blades to allow movement in the direction of plug blade thickness. The distance between the slit-shaped insertion regions can also be made shorter than the distance between the pair of connecting terminals to allow movement of the connecting terminals in the lateral width direction of the plug blades. Further, the width of the base plate of the inner casing can also be extended to the width of the pair of connecting terminals, and the slit-shaped insertion regions can extend to both sides of the base plate to allow smooth insertion and retraction of the plug blades. Here, the length of the insertion region slits can be made longer the lateral width of the connecting terminals to allow the connecting terminals to move laterally in the lengthwise direction of the slits. In this type of floating configuration, the fuse is housed in a floating configuration inside the inner casing fuse compartment. The connecting holes at both ends of the inner casing are connected to the cover casing connecting bosses in a manner that does not allow relative movement. This attaches the inner casing in a fixed position in the cover casing.

### [plug connecting section]

The external case 2 of Fig. 16 has a plug connecting section 25 provided with a projecting region 25X that projects out from the surface of the external case 2. The plug connecting section 25 projecting region 25X has a gasket 49 disposed around its entire perimeter. The plug connecting section 25 projecting region 25X is provided with a gasket groove 25C around its perimeter to dispose the gasket 49. An O-ring 49A gasket 49 is disposed in the gasket groove 25C. The O-ring 49A gasket 49 protrudes out from the surface of the projecting region 25X and is resiliently compressed by the inside surface of the service plug 4 cylindrical region 41A to connect the service plug 4 in a water-tight configuration. The gasket 49 makes tight contact with the inside of the cylindrical side-walls 41C, which form the service plug 4 cylindrical region 41A, to connect the service plug 4 in a water-tight manner. The service plug 4 shown in Fig. 18 is provided with cut-outs 41J J on both sides of the cylindrical side-walls 41C, and the locking hooks 41 F are established in those cut-outs 41 J. As shown in Fig. 19, the gasket 49 is inserted further into the cylindrical side-walls 41C than the position of the cut-outs 41 J to connect the cylindrical region 41A in a water-tight configuration. Specifically, the gasket groove 25C is positioned to insert the gasket 49 further inside the cylindrical side-walls 41 than the location of the cut-outs 41 J. The gasket 49 is sandwiched between the inside surface of the service plug 4 cylindrical region 41A and the outside surface of the plug connecting section 25 projecting region 25X to join the service plug 4 to the external case 2 in a water-tight configuration.

The plug connecting section 25 is provided with locking catches 25A that project from both sides to mate with the service plug 4 locking hooks 41 F. The locking catches 25A are established in positions that can interlock with the hook projections 41H on the ends of the locking hooks 41F when the service plug 4 is connected in a fixed position. This connects the service plug 4 to the external case 2 in a manner that does not unintentionally come apart.

The inside of the plug connecting section 25 is provided with a plug recess 25B for insertion of the service plug 4 inner casing 42. This plug connecting section 25 is provided with connecting walls 25D, and the plug recess 25B is established inside the connecting walls 25D. The gasket groove 25C is established on the outside surface of the connecting walls 25D, and the O-ring 49A gasket 49 is disposed in that gasket groove 25C. The inside of the connecting walls 25D is shaped to accept insertion of the inner casing 42 of the service plug 4. The connecting walls 25D are formed in a shape that allows insertion between the cover casing 41 cylindrical side-walls 41C and the inner casing 42 enclosure walls 42C. The service plug 4 inner casing 42 is inserted into the plug recess 25B in the plug connecting section 25, and the connecting walls 25D are inserted into the service plug 4 cylindrical region 41A to connect the service plug 4 in a fixed position. With the service plug 4 in the connected position, the locking hooks 41 F interlock with the locking catches 25A to connect the service plug 4 in a manner that does not disconnect unintentionally.

Further, the external case 2 has a pair of receptacles 31 mounted in a position to accept insertion of the service plug 4 connecting terminals 51 when the service plug 4 is connected to the plug connecting section 25. The receptacles 31 of Figs. 5, 12 and 16 are made up of output terminal lead-plate 8 pieces and flexible metal plates 32. As shown in Fig. 19, the connecting terminals 51 are inserted between the output terminal lead-plate 8 pieces and the flexible metal plates 32 of the receptacles 31. The output terminal lead-plate 8 is made up of the first lead-plate 81A, which is a lead-plate piece 81 connected to the output-side of the batteries 1, and the second lead-plate 81 B, which is a lead-plate piece 81 connected to an output terminal 7. The service plug 4 connects the first lead-plate 81A and the second lead-plate 81 B to connect the output terminal 7 to the output-side of the batteries 1. The front ends of the first lead-plate 81 A and the second lead-plate 81 B are separated by a specified distance, and contact regions 81X that form the contacts of the receptacles 31 are disposed in a common plane and in a straight-line. The back ends of the flexible metal plates 32 are attached to the output terminal lead-plate 8 pieces 81 to form flexible contacts 32X at the front ends. The gap between the flexible metal plate 32 flexible contacts 32X and the output terminal lead-plate 8 contact regions 81X is made smaller than the thickness of the connecting terminals 51. This forms a structure in which the flexible contacts 32X press the inserted connecting terminals 51 resiliently against the contact regions 81X to electrically connect the receptacles 31 to the connecting terminals 51.

In addition, the receptacles 31 shown in Figs. 12, 16, and 19 are provided with arcing projections 31a on the connecting terminal 51 insertion-side. The arcing projections 31 a of the figures project from the connecting terminal 51 insertion-sides of the ends of the output terminal lead-plate 8 contact regions 81X and the opposing flexible metal plate 32 flexible contacts 32X. Each pair of opposing arcing projections 31a are inclined and taper to a wider gap towards the insertion-side of the connecting terminals 51. This allows the connecting terminal 51 plug blades 51A to smoothly insert into the wider gap. In this type of structure with arcing projections 31a established on the receptacles 31, the insertion ends of the connecting terminal 51 plug blades 51A first contact the arcing projections 31a when the service plug 4 is plugged in for electrical connection. As a result, electrical arcing is confined to contact regions between the arcing projections 31 a and the tips of the connecting terminal 51 plug blades 51A. Therefore, dirt generated from carbonized material and surface roughness due to arcing result only at those initial contact regions. In particular, the width of the arcing projections 31 a on the receptacles 31 in the figures is made narrower than the connecting terminal 51 plug blades 51A. This makes it easier for arcing to occur between the opposing arcing projections 31 a and the tips of the inserted connecting terminal 51 plug blades 51A. In this manner, dirt and roughness generated by arcing during connecting terminal 51 insertion are limited to regions at the tips of the connecting terminals 51 and receptacles 31. This maintains the central electrical connecting surfaces of the connecting terminals 51 and the receptacles 31 in a clean, smooth condition. Consequently, with the connecting terminals 51 inserted between the flexible contacts 32X and contact regions 81X of the receptacles 31, the connecting terminals 51 and receptacles 31 can make stable contact with clean surfaces for reliable low resistance electrical connection.

The battery system described above is assembled in the following manner.
(1) As shown in Fig. 8, a plurality of batteries 1 are inserted with prescribed orientation (polarity) into the battery holder 11. The batteries 1 of the figures are inserted in the same direction (polarity) in vertical columns, and in alternating reverse directions (polarities) in lateral left-to-right rows. After loading all the batteries 1 in the battery holder 11 battery loading sections 12, the pair of battery holder 11 pieces are fastened together.
(2) As shown in Fig. 7, the circuit board 35 is mounted on top of the battery holder 11. The circuit board 35 is aligned inside the alignment ribs 18 on the upper surface of the battery holder 11 and attached via screws.
(3) The lead-plates 3 are positioned inside the recessed regions 13 of the battery holder 11 and weld-attached to the electrodes 1A at the ends of each battery 1. The lead-plates 3 are weld-attached to the battery 1 electrodes 1A exposed from the open ends of the battery holder 11 battery loading sections 12 by a technique such as spot-welding or laser-welding. Adjacent lead-plates 3 are disposed in columns separated by insulating gaps 34 to avoid contact. Lead-plate 3 extensions 3a are connected to the circuit board 35 via leads 36.
(4) As shown in Figs. 12 and 13, output terminal lead-plates 8 are mounted on the attachment plates 14 at both ends of the battery holder 11, and the output terminal lead-plates 8 are connected to the output lead-plates 3X.
(5) Positive and negative output terminal 7 metal rods 70 are attached to the positive and negative output terminal lead-plates 8 mounted on the attachment plates 14. Here, the metal rods 70 are attached while aligning them for insertion through the external case 2 through-holes 26 in the following step.
The previous steps assemble the battery assembly 10.
(6) The battery assembly 10 is inserted into the first external case 2A. At this time, the output terminal 7 metal rods 70 are inserted through the through-holes 26 in the first external case 2A. The rear ends of the positive and negative output terminals 7 are attached to the output terminal lead-plates 8 and the front ends are exposed outside the surface of the external case 2.
(7) The first external case 2A and second external case 2A are joined together. A gasket 39 is sandwiched between the connecting surfaces at the perimeter walls 21 of the first external case 2A and the second external case 2B, and the external case 2 is fastened together in a water-tight manner with case attachment screws 38.

The battery system of the present invention is optimally suited for outdoor electric powered vehicle applications such as an electric motor bike, electric bicycle, hybrid car, or electric vehicle. The battery system is also optimally suited for use as a power supply for various electrical equipment that require high power.

It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

The present application is based on Application No. 2010-015523 filed in Japan on January 27, 2010.

### LABELS

- 1: BATTERY
- 1A: ELECTRODE
- 2: EXTERNAL CASE
- 2A: FIRST EXTERNAL CASE
- 2B: SECOND EXTERNAL CASE
- 3: LEAD-PLATE
- 3X: OUTPUT LEAD-PLATE
- 3A: BATTERY CONNECTING SECTION
- 3B: OUTPUT EXTENSION
- 3a: LEAD-PLATE EXTENSIONS
- 3b: BENT END-SECTION
- 4: SERVICE PLUG
- 5: FUSE
- 6: PROTECTION DEVICE
- 6A: FUSE
- 7: OUTPUT TERMINAL
- 8: OUTPUT TERMINAL LEAD-PLATE
- 10: BATTERY ASSEMBLY
- 11: BATTERY HOLDER
- 11A: FIRST BATTERY HOLDER
- 11B: SECOND BATTERY HOLDER
- 12: BATTERY LOADING SECTION
- 13: RECESSED REGION
- 14: ATTACHMENT PLATE
- 15: ATTACHMENT BOSS
- 16: MOUNTING PROJECTION
- 17: THROUGH-HOLE
- 18: ALIGNMENT RIB
- 19: CASE-MOUNTING PIECE
- 19A: CASE-MOUNTING RECESS
- 20: SURFACE PLATE
- 21: PERIMETER WALL
- 22: ATTACHMENT EXTENSION
- 22A: LEAD WIRE OPENING
- 23: SCREW-HOLE
- 24: BOSS
- 25: PLUG CONNECTING SECTION
- 25X: PROJECTING REGION
- 25A: LOCKING CATCH
- 25B: PLUG RECESS
- 25C: GASKET GROOVE
- 25D: CONNECTING WALLS
- 26: THROUGH-HOLES
- 26A: CIRCULAR CYLINDRICAL THROUGH-HOLE
- 26B: NON-CIRCULAR CYLINDRICAL THROUGH-HOLE
- 27: PROJECTING CYLINDERS
- 28: CONNECTING BLOCK
- 28A: RECESS
- 29: SCREW BOSS
- 29A: SCREW-HOLE
- 30: SLIT
- 30A: VERTICAL SLIT
- 30B: HORIZONTAL SLIT
- 31: RECEPTACLE
- 31 a: ARCING PROJECTION
- 32: FLEXIBLE METAL PLATE
- 32X: FLEXIBLE CONTACT
- 33: SET SCREW
- 34: INSULATING GAP
- 35: CIRCUIT BOARD
- 36: LEAD
- 37: LEAD WIRES
- 38: CASE ATTACHMENT SCREW
- 39: GASKET
- 40: PLUG CASE
- 41: COVER CASING
- 41A: CYLINDRICAL REGION
- 41 B: COVER CAP
- 41C: CYLINDRICAL SIDE-WALLS
- 41D: CONNECTING BOSS
- 41: E SCREW-HOLE
- 41F: LOCKING HOOK
- 41G: FLEXIBLE ARM
- 41H: HOOK PROJECTION
- 41: RELEASE TAB
- 41J: CUT-OUT
- 42: INNER CASING
- 42A: FUSE COMPARTMENT
- 42B: BASE PLATE
- 42C: ENCLOSURE WALLS
- 42D: CONNECTING HOLE
- 42E: STEPPED RECESS
- 42F: INSERTION REGION
- 43: SET SCREW
- 44: WIDE-BRIMMED WASHER
- 49: GASKET
- 49A: O-RING
- 50: FUSE ELEMENT
- 51: CONNECTING TERMINAL
- 51A: PLUG BLADE
- 52: FUSE HOLDER
- 53: DETACHMENT RIDGE
- 70: METAL ROD
- 70A: CIRCULAR CYLINDRICAL SECTION
- 70B: NON-CIRCULAR CYLINDRICAL SECTION
- 71: GASKET GROOVE
- 72: O-RING
- 73: SCREW-HOLE
- 74: SCREW-HOLE
- 75: SET SCREW
- 76: EXTERNAL LEAD
- 77: CONTACT TERMINAL
- 81: LEAD-PLATE PIECE
- 81A: FIRST LEAD-PLATE
- 81 B: SECOND LEAD-PLATE
- 81X: CONTACT REGION
- 81 a: ATTACHMENT SECTION
- 81 b: CONNECTION SECTION
- 81c: UPRIGHT SECTION
- 81d: MOUNTING HOLE
- 81e: THROUGH-HOLE
- 81f: THROUGH-HOLE
- 82: LEAD-PLATE PIECE
- 82e: THROUGH-HOLE
- 82f: THROUGH-HOLE
- 85: SET SCREW
- 87: CONNECTION SCREW
- 102: CASE
- 103: CAP
- 104: THREADS
- 105: FLANGE
- 106: O-RING

## Claims

1. A battery system comprising:
an external case (2) housing a plurality of batteries (1), said external case (2) having a water-tight structure; and
a pair of output terminals (7) connected to the positive and negative output-sides of the batteries (1) ; wherein
the external case (2) has a pair of output terminal lead-plates (8) mounted inside and connected to the positive and negative output-sides of the batteries (1);
each output terminal (7) is a metal rod (70) with at least one end that is a circular or elliptical cylindrical section (70A) having a circular or elliptical cylindrical shape, resp., and a non-circular cylindrical section (70B) having a non-circular cylindrical shape; the front end of each metal rod (70) output terminal (7) is exposed outside the surface of the external case (2), and the aft end is attached to one of the output terminal lead-plates (8) mounted inside the external case (2); and
the external case (2) includes through-holes (26) having cylindrical through-hole sections (26A) to pass the circular or elliptical cylindrical sections (70A) of the metal rods (70), which are the output terminals (7);
**characterized in that**
the through-holes (26) of the external case (2) further have non-circular cylindrical through-hole sections (26B) to insert the non-circular cylindrical sections (70B) of the metal rods (70) in a manner that does not rotate;
each metal rod (70), which is an output terminal (7), has a gasket groove (71) in the circular or elliptical cylindrical section (70A) and an O-ring (72) is disposed **in that** gasket groove (71); the O-ring (72) seals the gap between the output terminal (7) circular or elliptical cylindrical section (70A) and the cylindrical through-hole section (26A) in a water-tight configuration; the non-circular cylindrical section (70B) inserts into the non-circular cylindrical through-hole section (26B) to attach the output terminal (7) to the external case (2) in a manner that does not rotate.

2. The battery system as cited in claim 1 wherein a connection screw (87) attaches-each output terminal (7) metal rod (70) to an output terminal lead-plate (8); the aft end of each metal rod (70), which is an output terminal (7), has a screw-hole (74) to screw in the connection screw (87); and the connection screw (87) is passed through the output terminal lead-plate (8) and screwed into the screw-hole (74) in the aft end of the metal rod (70) to attach the output terminal (7) to the output terminal lead-plate (8).

3. The battery system as cited in claim 1 wherein the front end of each output terminal (7) metal rod (70) that is exposed outside the surface of the external case (2) has a screw-hole (73) to connect an external lead (76) outside the external case (2).

4. The battery system as cited in claim 1 wherein each metal rod (70), which is an output terminal (7), has a front end that is a circular cylindrical section (70A), and a remaining region that is a non-circular cylindrical section (70B); and the maximum outside dimension of the non-circular cylindrical section (70B) is larger than the maximum outside diameter of the circular cylindrical section (70A).

5. The battery system as cited in claim 1 wherein each metal rod (70), which is an output terminal (7), has a non-circular cylindrical section (70B) that is a polygonal cylindrical shape, and each non-circular cylindrical through-hole (26B) in the external case (2) has a polygonal cylindrical shape to insert each metal rod (70) non-circular cylindrical section (70B) in a manner that does not rotate.

6. The battery system as cited in claim 1 wherein each cylindrical through-hole section (26A) is a circular cylindrical through-hole section (26A) and the outside diameter of each circular cylindrical section (70A) is smaller than the inside diameter of each circular cylindrical through-hole section (26A); a gap of 0.1 mm to 0.5mm is established between the circular cylindrical section (70A) and the circular cylindrical through-hole section (26A); and the gap is closed-off in a water-tight configuration by the O-ring (72) gasket.

7. The battery system as cited in claim 1 wherein the external case (2) is molded as a separate first external case (2A) and a second external case (2B); the first external case (2A) and the second external case (2B) are joined together with a gasket (39) intervening along the common connecting surfaces for a water-tight structure; attachment extensions (22) that hold the output terminal lead-plates (8) are provided projecting out from the ends; and space to dispose the output terminal lead-plates (8) is provided in the attachment extensions (22).

8. The battery system as cited in claim 7 wherein projecting cylinders (27) are formed in single-piece construction projecting inward from the outside surfaces of the attachment extensions (22); and the cylindrical through-hole sections (26A) and the non-circular cylindrical through-hole sections (26B) are established on the inside surfaces of the projecting cylinders (27).

9. The battery system as cited in claim 1 wherein a battery assembly (10) of a plurality of batteries (1) is housed inside the external case (2); the battery assembly (10) is provided with a plurality of batteries (1) that can be charged, a plastic battery holder (11) that disposes the batteries (1), and a plurality of lead-plates (3) weld-attached to electrodes (1A) at the ends of each battery (1) disposed in the battery holder (11) to electrically connect adjacent batteries (1).

10. The battery system as cited in claim 9 wherein the battery holder (11A) is provided with attachment plates (14) to mount the output terminal lead-plates (8).

11. The battery system as cited in claim 10 wherein the attachment plates (14) are provided with attachment bosses (15) to attach the output terminal lead-plates (8) via set screws (85), and mounting projections (16) to align the output terminal lead-plates (8) in specified positions.

12. The battery system as cited in claim 10 wherein the attachment plates (14) are provided with through-holes (17) for insertion of connection screws (87) to attach the output terminals (7) to the output terminal lead-plates (8).

13. The battery system as cited in claim 1 that is a battery system installed on-board an electrically powered vehicle.

## Patentansprüche

1. Batteriesystem, umfassend:
ein äußeres Gehäuse (2), das eine Vielzahl von Batterien (1) aufnimmt, wobei das äußere Gehäuse (2) eine wasserdichte Struktur aufweist; und
ein Paar von Ausgangsanschlüssen (7), die mit den positiven und negativen Ausgangsseiten der Batterien (1) verbunden sind; wobei
das äußere Gehäuse (2) ein Paar von Ausgangsanschluss-Leiterplatten (8) aufweist, die innen montiert und mit den positiven und negativen Ausgangsseiten der Batterien (1) verbunden sind;
jeder Ausgangsanschluss (7) ein Metallstab (70) mit mindestens einem Ende ist, das ein kreisförmig oder elliptisch zylindrischer Abschnitt (70A) mit jeweils entsprechend einer kreisförmigen oder elliptischen zylindrischen Form und ein nicht-kreisförmiger zylindrischer Abschnitt (70B) mit einer nicht-kreisförmigen zylindrischen Form ist; wobei das Vorderende von jedem Ausgangsanschluss-(7)-Metallstab (70) außerhalb der Oberfläche des äußeren Gehäuses (2) freiliegt und
das Rückende an einer der Ausgangsanschluss-Leiterplatten (8) befestigt ist, die innerhalb des äußeren Gehäuses (2) montiert sind; und
das äußere Gehäuse (2) Durchgangslöcher (26) mit zylindrischen Durchgangslochabschnitten (26A) enthält, um die kreisförmigen oder elliptischen zylindrischen Abschnitte (70A) der Metallstäbe (70) durchzulassen, welche die Ausgangsanschlüsse (7) sind;
**dadurch gekennzeichnet, dass**
die Durchgangslöcher (26) des äußeren Gehäuses (2) ferner nicht-kreisförmige zylindrische Durchgangslochabschnitte (26B) aufweisen, um die nicht-kreisförmigen zylindrischen Abschnitte (70B) der Metallstäbe (70) in einer nicht rotierenden Weise einzuführen;
jeder Metallstab (70), der ein Ausgangsanschluss (7) ist, eine Dichtungsnut (71) in dem kreisförmigen oder elliptischen zylindrischen Abschnitt (70A) aufweist und ein O-Ring (72) in dieser Dichtungsnut (71) angeordnet ist; wobei der O-Ring (72) die Lücke zwischen dem kreisförmigen oder elliptischen zylindrischen Abschnitt (70A) des Ausgangsanschlusses (7) und
dem zylindrischen Durchgangslochabschnitt (26) in einer wasserdichten Konfiguration abdichtet; wobei der nicht-kreisförmige zylindrische Abschnitt (70B) in den nicht-kreisförmigen zylindrischen Durchgangslochabschnitt (26B) eingefügt ist, um den Ausgangsanschluss (7) an dem äußeren Gehäuse (2) in einer nicht-rotierenden Weise zu befestigen.

2. Batteriesystem gemäß Anspruch 1, wobei eine Verbindungsschraube (87) jeden Ausgangsanschluss-(7)-Metallstab (70) an einer Ausgangsanschluss-Leiterplatte (8) befestigt; wobei das Rückende von jedem Metallstab (70), der ein Ausgangsanschluss (7) ist, eine Schraubbohrung (74) aufweist, um die Verbindungsschraube (87) einzuschrauben; und die Verbindungsschraube (87) durch die Ausgangsanschluss-Leiterplatte (8) durchtritt und in die Schraubbohrung (74) in dem Rückende des Metallstabs (70) eingeschraubt ist, um den Ausgangsanschluss (7) an der Ausgangsanschluss-Leiterplatte (8) zu befestigen.

3. Batteriesystem gemäß Anspruch 1, wobei das Vorderende von jedem Ausgangsanschluss-(7)-Metallstab (70), das außerhalb der Oberfläche des äußeren Gehäuses (2) freiliegt, eine Schraubbohrung (73) aufweist, um einen äußeren Leiter (76) außerhalb des äußeren Gehäuses (2) anzuschließen.

4. Batteriesystem gemäß Anspruch 1, wobei jeder Metallstab (70), der ein Ausgangsanschluss (7) ist, ein Vorderende aufweist, das ein kreisförmiger zylindrischer Abschnitt (70A) ist, und einen übrigen Bereich aufweist, der ein nicht-kreisförmiger zylindrischer Abschnitt (70B) ist; und die maximale Außendimension des nicht-kreisförmigen zylindrischen Abschnitts (70B) größer als der maximale Außendurchmesser des kreisförmigen zylindrischen Abschnitts (70A) ist.

5. Batteriesystem gemäß Anspruch 1, wobei jeder Metallstab (70), der ein Ausgangsanschluss (7) ist, einen nicht-kreisförmigen zylindrischen Abschnitt (70B) aufweist, der eine polygonale zylindrische Form aufweist, und jedes nicht-kreisförmige zylindrische Durchgangsloch (26B) in dem äußeren Gehäuse (2) eine polygonale zylindrische Form aufweist, um den nicht-kreisförmigen zylindrischen Abschnitt (70B) jedes Metallstabs (70) in einer nicht rotierenden Weise einzuführen.

6. Batteriesystem gemäß Anspruch 1, wobei jeder zylindrische Durchgangslochabschnitt (26A) ein kreisförmig zylindrischer Durchgangslochabschnitt (26A) ist und der Außendurchmesser von jedem kreisförmigen zylindrischen Abschnitt (70A) kleiner als der Innendurchmesser von jedem kreisförmigen zylindrischen Durchgangsloch-Abschnitt (26A) ist; eine Lücke von 0,1 mm bis 0,5 mm zwischen dem kreisförmigen zylindrischen Abschnitt (70A) und dem kreisförmigen zylindrischen Durchgangsloch-Abschnitt (26A) gebildet ist; und die Lücke durch die O-Ring-(72)-Abdichtung in einer wasserdichten Konfiguration geschlossen ist.

7. Batteriesystem gemäß Anspruch 1, wobei das äußere Gehäuse (2) als ein separates erstes äußeres Gehäuse (2A) und ein zweites äußeres Gehäuse (2B) geformt ist; wobei das erste äußere Gehäuse (2A) und das zweite äußere Gehäuse (2B) miteinander mit einer Abdichtung (39), die entlang der gemeinsamen verbindenden Oberflächen eingefügt ist, für eine wasserdichte Struktur verbunden sind; Befestigungsverlängerungen (22), welche die Ausgangsanschluss-Leiterplatten (8) halten, von den Enden heraus vorstehend vorgesehen sind; und Raum zur Anordnung der Ausgangsanschluss-Leiterplatten (8) in den Befestigungsverlängerungen (22) vorgesehen ist.

8. Batteriesystem gemäß Anspruch 7, wobei vorstehende Zylinder (27) in einer einstückigen Konstruktion geformt sind, die von den äußeren Oberflächen der Befestigungsverlängerungen (22) einwärts vorstehen; und die zylindrischen Durchgangslochabschnitte (26A) und die nicht-kreisförmigen zylindrischen Durchgangslochabschnitte (26B) auf den innenseitigen Oberflächen der vorstehenden Zylinder (27) gebildet sind.

9. Batteriesystem gemäß Anspruch 1, wobei eine Batterieanordnung (10) von einer Vielzahl von Batterien (1) innerhalb des äußeren Gehäuses (2) aufgenommen ist; die Batterieanordnung (10) mit einer Vielzahl von Batterien (1), die geladen werden können, einem Kunststoff-Batteriehalter (11), der die Batterien (1) anordnet, und mit einer Vielzahl von Leiterplatten (3) versehen ist, die durch Schweißen mit Elektroden (1A) an den Enden von jeder Batterie (1), die in dem Batteriehalter (11) angeordnet ist, befestigt sind, um benachbarte Batterien (1) elektrisch zu verbinden.

10. Batteriesystem gemäß Anspruch 9, wobei der Batteriehalter (11A) mit Befestigungsplatten (14) versehen ist, um die Ausgangsanschuss-Leiterplatten (8) zu montieren.

11. Batteriesystem gemäß Anspruch 10, wobei die Befestigungsplatten (14) mit Befestigungsansätzen (15) versehen sind, um die Ausgangsanschluss-Leiterplatten (8) über Feststellschrauben (85) zu befestigen, und mit Montiervorsprüngen (16) versehen sind, um die Ausgangsanschluss-Leiterplatten (8) in bestimmten Positionen auszurichten.

12. Batteriesystem gemäß Anspruch 10, wobei die Befestigungsplatten (14) mit Durchgangslöchern (17) zur Einführung von Verbindungsschrauben (87) versehen sind, um die Ausgangsanschlüsse (7) an den Ausgangsanschluss-Leiterplatten (8) zu befestigen.

13. Batteriesystem gemäß Anspruch 1, das ein Batteriesystem ist, das an Bord eines elektrisch angetriebenen Fahrzeugs installiert ist.

## Revendications

1. Système de batteries comprenant :
un boîtier externe (2) logeant une pluralité de batteries (1), ledit boîtier externe (2) ayant une structure étanche à l'eau ; et
une paire de bornes de sortie (7) reliées aux côtés de sortie positive et de sortie négative des batteries (1) ; dans lequel
le boîtier externe (2) comporte une paire de plaques de fils de borne de sortie (8) montées à l'intérieur et reliées aux côtés de sortie positive et de sortie négative des batteries (1) ;
chaque borne de sortie (7) est une tige métallique (70) avec au moins une extrémité ayant une section cylindrique circulaire ou elliptique (70A) respectivement de forme cylindrique circulaire ou elliptique, et une section cylindrique non circulaire (70B) de forme cylindrique non circulaire ; l'extrémité avant de chaque borne de sortie (7) de tige métallique (70) est exposée à l'extérieur de la surface du boîtier externe (2), et l'extrémité arrière est attachée à l'une des plaques de fils de borne de sortie (8) montées à l'intérieur du boîtier externe (2) ; et
le boîtier externe (2) comprend des trous traversants (26) ayant des sections de trous traversants cylindriques (26A) pour faire passer les sections cylindriques circulaires ou elliptiques (70A) des tiges métalliques (70), qui sont les bornes de sortie (7) ;
**caractérisé en ce que**
les trous traversants (26) du boîtier externe (2) ont en outre des sections de trous traversants cylindriques non circulaires (26B) dans lesquelles insérer les sections cylindriques non circulaires (70B) des tiges métalliques (70) de manière à ce qu'elles ne tournent pas ;
chaque tige métallique (70), qui est une borne de sortie (7), a une rainure de joint (71) dans la section cylindrique circulaire ou elliptique (70A) et un joint torique (72) est disposé dans cette rainure de joint (71) ; le joint torique (72) assure l'étanchéité de l'espacement entre la section cylindrique circulaire ou elliptique (70A) de borne de sortie (7) et la section de trou traversant cylindrique (26A) dans une configuration étanche à l'eau ; la section cylindrique non circulaire (70B) s'insère dans la section de trou traversant cylindrique non circulaire (26B) pour attacher la borne de sortie (7) au boîtier externe (2) de manière à ce qu'elle ne tourne pas.

2. Système de batteries selon la revendication 1, dans lequel une vis de liaison (87) attache chaque tige métallique (70) de borne de sortie (7) à une plaque de fils de borne de sortie (8) ; l'extrémité arrière de chaque tige métallique (70), qui est une borne de sortie (7), a un trou de vis (74) dans lequel visser la vis de liaison (87) ; et la vis de liaison (87) est passée à travers la plaque de fils de borne de sortie (8) et est vissée dans le trou de vis (74) dans l'extrémité arrière de la tige métallique (70) pour attacher la borne de sortie (7) à la plaque de fils de borne de sortie (8).

3. Système de batteries selon la revendication 1, dans lequel l'extrémité avant de chaque tige métallique (70) de borne de sortie (7) qui est exposée à l'extérieur de la surface du boîtier externe (2) comporte un trou de vis (73) pour relier un fil externe (76) à l'extérieur du boîtier externe (2).

4. Système de batteries selon la revendication 1, dans lequel chaque tige métallique (70), qui est une borne de sortie (7), a une extrémité avant qui est une section cylindrique circulaire (70A) et une région restante qui est une section cylindrique non circulaire (70B) ; et la dimension extérieure maximale de la section cylindrique non circulaire (70B) est supérieure au diamètre extérieur maximal de la section cylindrique circulaire (70A).

5. Système de batteries selon la revendication 1, dans lequel chaque tige métallique (70), qui est une borne de sortie (7), a une section cylindrique non circulaire (70B) de forme cylindrique polygonale, et chaque trou traversant cylindrique non circulaire (26B) dans le boîtier externe (2) a une forme cylindrique polygonale pour insérer chaque section cylindrique non circulaire (70B) de tige métallique (70) de manière à ce qu'elle ne tourne pas.

6. Système de batteries selon la revendication 1, dans lequel chaque section de trou traversant cylindrique (26A) est une section de trou traversant cylindrique circulaire (26A) et le diamètre extérieur de chaque section cylindrique circulaire (70A) est inférieur au diamètre intérieur de chaque section de trou traversant cylindrique circulaire (26A) ; un espacement de 0,1 mm à 0,5 mm est établi entre la section cylindrique circulaire (70A) et la section de trou traversant cylindrique circulaire (26A) ; et l'espacement est fermé dans une configuration étanche à l'eau par le joint torique (72).

7. Système de batteries selon la revendication 1, dans lequel le boîtier externe (2) est moulé sous la forme d'un premier boîtier externe (2A) et d'un deuxième boîtier externe (2B) distincts ; le premier boîtier externe (2A) et le deuxième boîtier externe (2B) sont joints l'un à l'autre avec un joint (39) intervenant le long des surfaces de liaison communes pour une structure étanche à l'eau ; des extensions d'attachement (22) qui maintiennent les plaques de fils de borne de sortie (8) sont fournies en faisant saillie à partir des extrémités ; et un espace pour disposer les plaques de fils de borne de sortie, (8) est fourni dans les extensions d'attachement (22).

8. Système de batteries selon la revendication 7, dans lequel des cylindres faisant saillie (27) sont formés dans une construction d'une seule pièce faisant saillie vers l'intérieur à partir des surfaces extérieures des extensions d'attachement (22) ; et les sections de trous traversants cylindriques (26A) et les sections de trous traversants cylindriques non circulaires (26B) sont établies sur les surfaces intérieures des cylindres faisant saillie (27).

9. Système de batteries selon la revendication 1, dans lequel un ensemble de batteries (10) d'une pluralité de batteries (1) est logé à l'intérieur du boîtier externe (2) ; l'ensemble de batteries (10) est pourvu d'une pluralité de batteries (1) qui peuvent être chargées, d'un porte-batterie en plastique (11) qui dispose les batteries (1), et d'une pluralité de plaques de fils (3) attachées par soudage à des électrodes (1A) aux extrémités de chaque batterie (1) disposée dans le porte-batterie (11) pour relier électriquement des batteries adjacentes (1).

10. Système de batteries selon la revendication 9, dans lequel le porte-batterie (11A) est pourvu de plaques d'attachement (14) pour monter les plaques de fils de borne de sortie (8).

11. Système de batteries selon la revendication 10, dans lequel les plaques d'attachement (14) sont pourvues de bossages d'attachement (15) pour attacher les plaques de fils de borne de sortie (8) par l'intermédiaire de vis de réglage (85), et de saillies de montage (16) pour aligner les plaques de fils de borne de sortie (8) à des positions spécifiées.

12. Système de batteries selon la revendication 10, dans lequel les plaques d'attachement (14) sont pourvues de trous traversants (17) dans lesquels insérer des vis de liaison (87) pour attacher les bornes de sortie (7) aux plaques de fils de borne de sortie (8).

13. Système de batteries selon la revendication 1, qui est un système de batteries installé à bord d'un véhicule électrique.
